# EUROPÄISCHE PATENTSCHRIFT

(11) **EP 2 905 077 B1**
(45) Veröffentlichungstag und Bekanntmachung des Hinweises auf die Patenterteilung: **22.08.2018**
(21) Anmeldenummer: 14154155.7
(22) Anmeldetag: 06.02.2014
(51) Int. Cl.: B01J 37/30, B01J 23/44, B01D 53/94

(54) **Katalytisch wirksame Zusammensetzung mit großer CO-Oberfläche**
Catalytically active composition with large CO surface
Composition catalytiquement active ayant une grande surface de CO

(43) Veröffentlichungstag der Anmeldung: 12.08.2015
(73) Patentinhaber: Heraeus Deutschland GmbH & Co. KG, 63450 Hanau (DE)
(72) Erfinder: Wille, Ansgar, 63454 Hanau-Mittelbuchen (DE); Bonifer, Marcus, 63075 Offenbach (DE); Kemmer, Martina, 63796 Kahl am Main (DE)
(74) Vertreter: Heraeus IP

(56) Entgegenhaltungen:
- EP-A1- 1 316 354
- GB-A- 1 528 896

## Beschreibung

Die vorliegende Erfindung betrifft ein Verfahren zur Herstellung einer katalytisch wirksamen Zusammensetzung für Katalysatoren.

Schon seit langer Zeit wird insbesondere bei Kraftfahrzeugen das Abgas des Verbrennungsmotors mit Hilfe eines Katalysators nachbehandelt. Dabei besteht die Aufgabe des Katalysators darin, die bei der Verbrennung entstehenden Schadstoffe Kohlenwasserstoffe (CₘHₙ), Kohlenstoffmonoxid (CO) und Stickoxide (NOₓ) in die ungiftigen Stoffe Kohlenstoffdioxid (CO₂), Wasser (H₂O) und Stickstoff (N₂) umzuwandeln. Dabei finden die folgenden Oxidations- und Reduktionsreaktionen statt:

2 CO + O₂ → 2 CO₂

2 C₂H₆ + 7 O₂ → 4 CO₂ + 6 H₂O

2 NO + 2 CO → N₂ + 2 CO₂

Man unterscheidet verschiedene Arten von Katalysatoren. Neben dem 3-Wege-Katalysator sind am bekanntesten Oxidationskatalysatoren und NOₓ-Speicherkatalysatoren.

Der 3-Wege-Katalysator, auch geregelter Katalysator oder G-Kat genannt, gehört heute zur Standardausrüstung eines Otto-Pkws. Dabei bezieht sich das "geregelt" auf das Motormanagement mit seiner Verbrennung. Der Drei-Wege-Katalysator kann nur bei Fahrzeugen mit Ottomotor und Lambdaregelung eingesetzt werden. Bei einem Drei-Wege-Katalysator finden die Oxidation von CO und HₘCₙ sowie die Reduktion von NOₓ parallel zueinander statt. Voraussetzung dafür ist ein konstantes Luft-Kraftstoff-Gemisch im stöchiometrischen Verhältnis von Lambda gleich 1.

Im Otto-Motor stellt die Lambdasonde die geregelte Verbrennung des Treibstoffs sicher. Mit Hilfe der Lambdasonde wird im Abgas eines Verbrennungsmotors das Verhältnis von Luft zu Kraftstoff bestimmt. Die Messung basiert auf dem Restsauerstoffgehalt im Abgas. Sie ist der Hauptsensor im Regelkreis der Lambdaregelung zur katalytischen Abgasnachbehandlung mit einem geregelten Katalysator und liefert den Messwert an das Motorsteuergerät.

Die Lambdaregelung stellt im Abgas eines Verbrennungsmotors einen gewünschten Lambdawert ein. Als Lambda (λ) bezeichnet man dabei das Verbrennungsluftverhältnis. Dieses setzt die tatsächlich für eine Verbrennung zur Verfügung stehende Luftmasse ins Verhältnis zur mindestens notwendigen stöchiometrischen Luftmasse, die für eine vollständige Verbrennung des Kraftstoffs benötigt wird. Beim stöchiometrischen Kraftstoffverhältnis ist genau die Luftmenge vorhanden um den Kraftstoff vollständig zu verbrennen. Dies wird als λ=1 bezeichnet. Ist mehr Kraftstoff vorhanden spricht man von fettem Gemisch (λ<1), bei Luftüberschuss von magerem Gemisch (λ>1). Bei einer Abweichung vom stöchiometrischen Luft-Kraftstoff-Verhältnis in den Luftüberschuss, den mageren Bereich, werden nicht alle Stickoxide abgebaut, da die benötigten Reduktionsmittel schon vorher oxidiert werden. Im Luftunterschuss, im fetten Bereich, werden nicht alle Kohlenwasserstoffe und nicht das gesamte Kohlenstoffmonoxid abgebaut.

Das Verbrennungsluftverhältnis Lambda λ, auch Luftüberschuss, Luftüberschusszahl oder kurz Luftzahl genannt, ist eine Kennzahl aus der Verbrennungslehre. Aus der Zahl lassen sich Rückschlüsse auf den Verbrennungsverlauf, Temperaturen, Schadstoffentstehung und den Wirkungsgrad ziehen. Die richtige Abstimmung von Vergaser- oder Einspritzanlage und somit die Einstellung von Lambda λ hat einen großen Einfluss auf Motorleistung, Spritverbrauch und Schadstoffausstoß.

Die Lambdaregelung findet bei Otto-Motoren üblicherweise zwischen engen Grenzen von ca. 0,97<λ<1,03 statt. Den Bereich innerhalb dieser Grenzen bezeichnet man als Lambdafenster. Innerhalb dieses Bereiches wird die beste Reduzierung aller drei Schadstoffarten erzielt. Bei hoher Motorleistung wird durch einen fetten Motorbetrieb und dadurch kälterem Abgas einer Überhitzung und Zerstörung von Abgasbauteilen wie z. B. Krümmer, Turbolader, Katalysator vorgebeugt.

Damit im Betrieb ein Wert von λ = 1 erhalten werden kann, muss im Katalysator ausreichend Sauerstoff zur Verfügung stehen, um die oben gezeigten Oxidationsreduktionen ausführen zu können. Auf der anderen Seite muss bei der Reduktion freiwerdender Sauerstoff gebunden werden, damit die Reduktion der Stickoxide zu Stickstoff stattfindet. 3-Wege-Katalysatoren enthalten meist einen Sauerstoffspeicher, der unter oxidativen Bedingungen mit Sauerstoff aufgeladen wird und unter reduzierenden Bedingungen wieder Sauerstoff abgeben kann.

Neben dem Sauerstoffspeicher umfasst ein Katalysator häufig auch wenigstens ein Edelmetall; meist handelt es sich hierbei um Platin, Palladium und/oder Rhodium. Wird in einem Katalysator weiterhin Aluminiumoxid verwendet, so ist darauf zu achten, dass das Rhodium nicht auf das Aluminiumoxid aufgetragen wird. Bei höheren Temperaturen lagert sich das Rhodium in die poröse Struktur des Aluminiumoxids und steht damit für die eigentliche Katalyse-Reaktion nicht mehr zur Verfügung. So beschreibt beispielsweise EP 1053779 A1 einen Katalysator, in welchem die katalytisch aktive Schicht ein Cer-Komplexoxid und ein Zirkonium-Komplex-Oxid umfasst. Während sich auf dem Cer-Komplexoxid Palladium befindet, sind auf dem Zirkonium-Komplex-Oxid Platin und Rhodium aufgetragen.
Die Edelmetalle sind dabei auf ein Trägermaterial aufgebracht und bilden die aktiven Zentren auf der Oberfläche des Katalysators. Um eine hohe Umsetzung durch einen Katalysator zu erhalten, ist es wünschenswert, dass möglichst viele aktive Edelmetallzentren vorhanden und diese möglichst gleichmäßig auf der Oberfläche verteilt sind. Da die Edelmetalle in Katalysatoren üblicherweise in Form von annähernd sphärischen Teilchen auf der Oberfläche des Trägermaterials vorliegen, ist es zudem vorteilhaft, wenn die Teilchen einen möglichst geringen Durchmesser haben. Bei gleicher Gesamtmenge an aufgebrachtem Edelmetall ergibt sich dann eine große Anzahl an Edelmetallteilchen, welche eine große Oberfläche, also Kontaktfläche, aufweisen, an der eine Reaktion stattfinden kann. Dies gilt sowohl für die im Stand der Technik ausführlich beschriebenen Abgaskatalysatoren als auch für andere, beispielsweise bei der Synthese unterschiedlicher Verbindungen beteiligten Katalysatoren.

Um die Edelmetalle möglichst homogen auf dem Träger zu verteilen, muss bereits bei der Herstellung auf eine gute Verteilung des eingesetzten Edelmetalls geachtet werden. Üblicherweise wird daher das Edelmetall in Form eines Salzes in Lösung gebracht und auf ein Trägermaterial aufgezogen. So beschreibt beispielsweise EP 2 524 727 A1 in einem Ausführungsbeispiel, dass Ruthenium-Trichlorid in Ethylenglycol gelöst wird. Die Lösung wird dann mit dem Trägermaterial gemischt. EP 2022 562 A1 und US 2009/022643 A1 beschreiben die Verwendung einer Lösung, die 0,4 mol Ruthenium pro Liter enthält. Diese Lösung wird zur Beschichtung einer Trägerstruktur eingesetzt.

Die Anzahl der aktiven Edelmetallzentren kann beispielsweise mittels CO-Chemisorption ermittelt werden. Hierfür wird ein Katalysator für 20 Minuten bei 400 °C unter synthetischer Luft, welche aus 80 % Stickstoff und 20 % Sauerstoff besteht, in einem geschlossenen Behältnis oxidiert. Anschließend werden das Behältnis und damit auch der Katalysator mit Stickstoff gespült, und zwar so lange, bis kein Sauerstoff mehr aus dem Behältnis strömt, bzw. in dem ausströmenden Gas kein Sauerstoff mehr zu detektieren ist. Es erfolgt ein pulsweises Dosieren von Kohlenstoffmonoxid (CO) in das Behältnis, in welchem sich der Katalysator befindet. Dies erfolgt so lange, bis nach dem Katalysator konstante CO-Peaks detektiert werden. Durch Bestimmung der Peak-Fläche des dosierten CO und durch Bestimmen der Peak-Fläche des umgesetzten CO wird die durch den Katalysator aufgenommene Menge an CO bestimmt. Hierfür wird das Integral der Fläche des umgesetzten CO vom Integral der Fläche an dosiertem CO subtrahiert.

Aus der so erhaltenen Menge an aufgenommenem CO wird dann berechnet, wie viel CO je eingesetzter Menge an katalytisch aktiver Zusammensetzung, gespeichert wurde. Über Umrechnungen lässt sich aus der gemessenen, an den aktiven Zentren gespeicherten CO-Menge, die Oberfläche der aktiven Edelmetallzentren (oft auch als CO-Oberfläche oder Edelmetalloberfläche bezeichnet) bestimmen. Sie wird in m²/g angegeben.

Mittels CO-Chemisorption kann ebenfalls die Sauerstoffspeicherkapazität eines Materials bestimmt werden. Hierzu wird die zu analysierende Probe zunächst bei einer bestimmten Temperatur (350 °C) mit Sauerstoff vollständig oxidiert. Anschließend wird die Probe so lange mit CO "bepulst" bis kein Sauerstoff mehr in der Probe zur Oxidation des CO im Gas vorhanden ist. Bepulsen bedeutet, dass CO pulsweise dosiert wird. Das durch die zu analysierende Probe strömende Gas wird detektiert. Durch Analyse der Fläche unter den durch die Detektion erhaltenen Peaks kann dann die Menge des umgesetzten CO bestimmt werden, welches ein Maß für die Sauerstoffspeicherkapazität darstellt. Die Sauerstoffspeicherkapazität wird daher in µmol CO pro Gramm katalytisch wirksamer Zusammensetzung angegeben.

Bestimmt man die CO-Oberfläche von konventionellen, handelsüblichen Katalysatoren im KFZ-Bereich, so weisen diese üblicherweise eine CO-Oberfläche von 6 m²/g oder weniger auf.

Um die katalytische Aktivität eines Katalysators zu verbessern, besteht Bedarf an Katalysatoren mit möglichst vielen aktiven Edelmetallzentren, also einer großen CO-Oberfläche, welche in der Lage sind, den Ausstoß an CO, HC und NOₓ sowohl im fetten als auch im mageren Betrieb des Motors gegenüber bekannten Katalysatoren zu reduzieren. Insbesondere bei Motorrädern kann die Schwankung von λ beim Betrieb des Motors größer sein, als der für Otto-Motoren übliche Bereich von 0,97<λ<1,03. Hier ist es notwendig, dass der Katalysator auch bei größeren Abweichungen von λ=1, insbesondere im Bereich von 0,8<λ<1,2 noch funktioniert und die Abgase entsprechend umgewandelt werden. Katalysatoren mit einer gegenüber im Stand der Technik beschriebenen erhöhten Aktivität sind jedoch nicht nur im Bereich der Abgasnachbehandlung von Verbrennungsmotoren gesucht, sondern beispielsweise auch in der Synthese chemischer Substanzen.

GB 1 528 896 A offenbart in den Beispielen die Herstellung wässriger Palladiumchloridlösungen mit einem Palladiumgehalt von 0,0025 bzw. 0,0075 Gew.-% und deren Verwendung zum Belegen körnigen gamma-Aluminiumoxid-Katalysatorträgermaterials mit Palladium.

EP 1 316 354 A1 offenbart ein Verfahren zur Herstellung eines Katalysators zur Verminderung der Stickoxide im Abgas von Magermotoren, wobei zuerst ein mit Platin belegtes Aluminiumoxid in Wasser suspendiert wird. Zu dieser Suspension wird eine Lösung von Palladiumnitrat gegeben und nach Sorption des Palladiumnitrats auf dem Material wird ein Speichermaterial und ein mit Rhodium belegtes Aluminiumoxid zur Suspension hinzugefügt.

Es ist die Aufgabe der vorliegenden Erfindung ein Verfahren zur Herstellung eine katalytisch wirksamen Zusammensetzung für einen Katalysator mit einer gegenüber dem Stand der Technik größeren Anzahl an aktiven Edelmetallzentren bereit zu stellen. Zudem soll der Katalysator in der Lage sein, bei der Abgasnachbehandlung von Verbrennungsmotoren auftretende Lambda-Schwankungen auszugleichen.

Die der vorliegenden Erfindung zugrunde liegende Aufgabe wird gelöst durch ein Verfahren zur Herstellung einer katalytisch wirksamen Zusammensetzung für Katalysatoren, das die folgenden Schritte umfasst:
a) Bereitstellen eines ersten oxidischen Trägermaterials,
b) Bereitstellen von einem oder mehreren Edelmetallsalzen in Form einer Edelmetallsalzlösung wobei die Konzentration an Edelmetall in der Lösung 0,01 Gew.-% oder weniger, bezogen auf 100 Gew.-% der Gesamtlösung, beträgt,
c) Herstellung einer Suspension bei der das erste oxidische Trägermaterial aus Schritt a) mit der Edelmetallsalzlösung aus Schritt b) in Kontakt gebracht wird und
d) Einbringen eines zweiten oxidischen Trägermaterials in die in Schritt c) erhaltene Suspension,
wobei das erste oxidische Trägermaterial Cer-Zirkonium-Oxid ist, und
wobei das Edelmetall/die Edelmetalle ausgewählt ist/sind aus der Gruppe der Platingruppenmetalle, insbesondere aus der Gruppe, die aus Platin, Palladium und Rhodium besteht.

Überraschenderweise hat sich gezeigt, dass die Herstellung einer katalytisch wirksamen Zusammensetzung, mit einer Konzentration an Edelmetall in der Lösung von 0,01 Gew.-% oder weniger, insbesondere von 0,008 Gew.-% oder weniger, besonders bevorzugt von 0,007 Gew.-% oder weniger, jeweils bezogen auf 100 Gew.-% der Gesamtlösung, die Herstellung einer Zusammensetzung ermöglicht, die eine CO-Oberfläche von 6 m²/g oder mehr, vorzugsweise von 7 m²/g oder mehr, insbesondere bevorzugt von 7,5 m²/g oder mehr aufweist. Die CO-Oberfläche wird gemäß dem zuvor beschriebenen Verfahren bestimmt. Sie wird in m² pro Gramm katalytisch wirksame Zusammensetzung angegeben. Eine solche gegenüber dem Stand der Technik erhöhte CO-Oberfläche bedeutet, dass die Zusammensetzung und damit auch Katalysatoren, welche die Zusammensetzung enthalten, eine gegenüber konventionellen Katalysatoren erhöhte Anzahl an aktiven Metallzentren aufweisen. Dies führt zu einer größeren aktiven Oberfläche, wodurch die Aktivität des Katalysators erhöht wird.

Um eine Edelmetallsalzlösung zu erhalten, welche eine Edelmetallkonzentration von 0,01 Gew.-% oder weniger aufweist, kann eine konventionelle Edelmetallsalzlösung verdünnt werden. Edelmetallsalzlösungen weisen üblicherweise eine Konzentration von Edelmetall in einem Anteil von etwa 14 Gew.-% auf. Um eine erfindungsgemäße Konzentration zu erhalten, wird eine solche Lösung annähernd um den Faktor 1000 verdünnt. Dies führt neben einer Reduktion der Konzentration des Edelmetalls in der Lösung zu einer deutlichen Volumenzunahme der Edelmetallsalzlösung. Verdünnungen, in welchen die Edelmetallsalzlösung um den Faktor 3000 (entspricht einem Anteil von 0,00175 Gew.-% an Edelmetall in der Lösung) oder stärker verdünnt werden, sind in dem erfindungsgemäßen Verfahren nicht mehr wirtschaftlich einsetzbar. Um die gewünschte oder benötigte Gesamtmenge an Edelmetall in der katalytisch wirksamen Zusammensetzung zu erreichen, weist die in Schritt c) erhaltene Suspension bei einer Verdünnung um den Faktor 3000 ein so großes Volumen auf, dass die Weiterverarbeitung nicht mehr wirtschaftlich ist.

Suspension im Sinne der vorliegenden Erfindung ist eine Mischung aus einem Feststoff und einer Flüssigkeit, wobei der Feststoff in Form von fein verteilten Festkörpern in der Flüssigkeit gleichmäßig verteilt vorliegt.

Das erste und das zweite oxidische Trägermaterial können gleich oder voneinander verschieden sein. Das zweite oxidische Trägermaterial kann ausgewählt sein aus der Gruppe, die aus Aluminiumoxid, Cer-Zirkonium-Oxid, Bariumoxid, Zinnoxid und Titanoxid besteht.

Die Auswahl des Trägermaterials/der Trägermaterialien erfolgt dabei nach der späteren Anwendung der nach dem erfindungsgemäßen Verfahren erhaltenen katalytisch wirksamen Zusammensetzung. Wird die Zusammensetzung beispielsweise in einem Katalysator für einen Verbrennungsmotor eingesetzt, so ist das erste oxidische Trägermaterial Cer-Zirkonium-Oxid und das zweite oxidische Trägermaterial vorzugsweise ausgewählt aus Aluminiumoxid oder einem Cer-Zirkonium-Oxid.

Das erste und/oder zweite oxidische Trägermaterial der Zusammensetzung umfasst eines oder mehrere der genannten Materialien. Vorzugsweise besteht es aus einem der genannten Oxide. Dabei können die Oxide mit anderen Materialien dotiert sein. So kann Cer-Zirkonium-Oxid beispielsweise mit Lanthanoxid, Praseodymoxid, Neodymoxid und/oder Hafniumoxid dotiert sein. Dabei kann der Anteil der jeweiligen Metalloxide 2 Gew.-% bis 10 Gew.-%, bevorzugt 3 Gew.-% bis 7 Gew.-% bezogen auf 100 Gew.-% des Cer-Zirkonium-Oxids betragen. Eine solche Dotierung in dem genannten Bereich führt zu einer verbesserten thermischen Stabilität des Cer-Zirkonium-Oxids. Liegt der Anteil darunter, ist kein Effekt sichtbar. Bei höheren Anteilen von über 10 Gew.-% wird die Stabilität nicht weiter erhöht.

Bei dem Cer-Zirkonium-Oxid kann es sich im Sinne der vorliegenden Erfindung sowohl um ein Mischoxid aus Cer und Zirkonium, als auch eine Mischung der beiden Oxide Ceroxid CeO₂ und Zirkoniumoxid ZrO₂ handeln. Erfindungsgemäß umfasst das Cer-Zirkonium-Oxid sowohl Cerreiche Oxide als auch Zirkonium-reiche Oxide.

Als Aluminiumoxid wird üblicherweise gamma-Aluminiumoxid (γ-Al₂O₃) verwendet. Dieses ist vorzugsweise mit Lanthanoxid La₂O₃ dotiert. Bei Verwendung der erfindungsgemäß hergestellten Zusammensetzung in einem Katalysator beeinflusst das γ-Al₂O₃ die Haftung der Zusammensetzung auf der Oberfläche eines Katalysatorträgers, wenn die Zusammensetzung auf einen solchen aufgebracht werden soll.

Das g-Al₂O₃ besitzt bevorzugt eine Teilchengröße d90 im Bereich von 10 µm bis 35 µm, bevorzugt im Bereich von 15 µm bis 30 µm, besonders bevorzugt im Bereich von 19 µm bis 24 µm. Hierbei handelt es sich um die Teilchengrößen von ungemahlenem γ-Al₂O₃. Üblicherweise wird im Stand der Technik beschrieben, dass γ-Al₂O₃ gemahlen wird. Es hat sich jedoch gezeigt, dass ein Mahlschritt nicht notwendig ist. Überraschenderweise konnte die Abgasnachbehandlung mit einer erfindungsgemäß hergestellten Zusammensetzung aus ungemahlenen Bestandteilen gegenüber einer Zusammensetzung aus gemahlenen Bestandteilen verbessert werden.

Die Bestimmung der Partikelgrößenverteilung erfolgte nach ISO 13320 mit dem Lasergranulometer CILAS 920 der Firma Quantachrome, Odelzhausen, Deutschland. Bei der Messung wurde eine niedrigenergetische Laserdiode mit einer Leistung von 3 mW und einer Wellenlänge von 830 nm verwendet. Die Begriffe "Teilchengröße", "Teilchengrößenverteilung", "Partikelgröße" und "Partikelgrößenverteilung" werden in der vorliegenden Anmeldung synonym verwendet und bezeichnen jeweils die nach ISO 13320 per Lasergranulometer bestimmte Partikelgrößenverteilung.

Bei γ-Al₂O₃ ist eine große BET-Oberfläche bevorzugt. Die BET-Oberfläche von γ-Al₂O₃ liegt üblicherweise bei etwa 200 m²/g. Bei hohen Temperaturen, wie sie beispielsweise beim Sintern bei der Herstellung eines Katalysators oder auch im Betrieb auftreten, sinkt dieser Wert auf etwa 40 bis 50 m²/g. Durch die Dotierung mit Lanthanoxid wird eine höhere thermische Stabilität von γ-Al₂O₃ erreicht. Die BET-Oberfläche von dotiertem γ-Al₂O₃ liegt auch nach thermischer Behandlung noch in einem Bereich von über 70 m²/g, besonders bevorzugt bei 90 m²/g.

Die BET-Oberfläche wird auch spezifische Oberfläche genannt und kann nach der im Stand der Technik bekannten BET-Methode bestimmt werden. Für die Messung wird ein Gas, häufig Stickstoff, über das zu untersuchende Material geleitet. Mit Hilfe der BET-Gleichung wird aus einer adsorbierten Gasmenge die Menge an Adsorbat berechnet, die auf der Oberfläche des zu untersuchenden Gegenstandes eine Schicht, die sogenannte Monoschicht, ausbildet. Die Anzahl der Mol in der Monoschicht Vm multipliziert mit der Avogadrozahl N_{A} und dem Platzbedarf eines Gasmoleküls (Stickstoff: aₘ = 0,162 nm²) ergibt die BET-Oberfläche.

In der nachfolgenden Tabelle 1 wird die CO-Oberfläche einer katalytisch wirksamen Zusammensetzung, wie sie nach im Stand der Technik bekannten Verfahren hergestellt wurde, angeführt. Diese Zusammensetzung, welche als Zusammensetzung 1 (Zus. 1) bezeichnet wird, weist eine CO Oberfläche von 5,7 m²/g auf. Eine ebenfalls nicht erfindungsgemäß hergestellte Zusammensetzung (Zus. 2) weist sogar eine CO-Oberfläche von lediglich 1,6 m²/g auf. Eine nach dem erfindungsgemäßen Verfahren hergestellte (erfindungsgemäß hergestellte) katalytisch wirksame Zusammensetzung (Zus. 4) weist hingegen eine CO Oberfläche von 7,8 m²/g beziehungsweise 12,4 m²/g (Zus. 3) auf.
Die Menge an Edelmetall, das insgesamt mit dem ersten oxidischen Trägermaterial in Kontakt gebracht wurde, beträgt jeweils 1,65 Gew.-% bezogen auf ein Gesamtgewicht von 100 Gew.-% aus erstem oxidischen Trägermaterial und Edelmetall (Spalte 3 der Tabelle 1). In der letzten Spalte ist dann die jeweilige Konzentration an Edelmetall in der Edelmetallsalzlösung genannt.

Die CO-Oberfläche wurde, wie oben beschrieben, bestimmt. Hierfür wurden 150 g/L der erfindungsgemäß hergestellten katalytisch wirksamen Zusammensetzung auf eine Wabenstruktur als Trägerstruktur aufgebracht. Dabei bezieht sich die Angabe "g/L" auf Gramm der aufgetragenen katalytisch wirksamen Zusammensetzung pro Liter an Leervolumen der Trägerstruktur. Die mit der Zusammensetzung beschichteten Trägerstrukturen wurden dann, wie weiter oben beschrieben, analysiert. Die Ergebnisse der Messungen sind in Spalte 5 der Tabelle 1 gezeigt.

**Tabelle 1:**

| Zusammensetzung | Edelmetall | Gesamtmenge aufgetragenes Edelmetall | 1. und 2. oxidisches Trägermaterial | CO-Oberfläche [m²/g] | Konzentration Edelmetallsalz lösung |
|---|---|---|---|---|---|
| Zus. 1 (nicht erfindungsgemäß hergestellt) | Pd | 1,65 Gew.-% | 1.: Nr. 5 | 5,7 | 7 Gew.-% |
| | | | 2.: Nr. 2 | | |
| Zus. 2 (nicht erfindungsgemäß hergestellt) | Pd | 1,65 Gew.-% | 1.: Nr. 3 | 1,6 | 7 Gew.-% |
| | | | 2.: Nr. 2 | | |
| Zus. 3 (erfindungsgemäß hergestellt) | Pd | 1,65 Gew.-% | 1.: Nr. 3 | 12,4 | 0,002 Gew.-% |
| | | | 2.: Nr. 2 | | |
| Zus. 4 (erfindungsgemäß hergestellt) | Pd | 1,65 Gew.-% | 1.: Nr. 5 | 7,8 | 0,002 Gew.-% |
| | | | 2.: Nr. 2 | | |

In der 4. Spalte der Tabelle 1 sind das erste und das zweite oxidische Trägermaterial angegeben, wobei immer zunächst das erste und anschließend das zweite oxidische Trägermaterial der Zusammensetzung genannt werden. In den Zusammensetzungen werden jeweils 70 Gew.-% des ersten oxidischen Trägermaterials und 30 Gew.-% des zweiten oxidischen Trägermaterials eingesetzt, wobei die Summe aus erstem und zweitem oxidischen Trägermaterial ohne das Edelmetall/die Edelmetalle 100 Gew.-% entspricht. Die oxidischen Trägermaterialien sind in der nachfolgenden Tabelle 2 in ihrer Zusammensetzung beschrieben. Die Angaben erfolgen, soweit nicht anders angegeben, in Gew.-%.

**Tabelle 2: oxidische Trägermaterialien**

| Oxidisches Trägermaterial | CeO₂ | ZrO₂ | La₂O₃ | Pr₆O₁₁ | Nd₂O₃ | Al₂O₃ | La₂O₃ | BET [m²/g] |
|---|---|---|---|---|---|---|---|---|
| Nr. 1 | 60 | 30 | 3 | 7 | | | | 49 |
| Nr. 2 | | | | | | 97,1 | 2,9 | 131 |
| Nr. 3 | 74,5 | 25,5 | | | | | | 190 |
| Nr. 4 | 20 | 73 | 2 | | 5 | | | 109 |
| Nr. 5 | 68 | 24 | 8 | | | | | 94 |

Bevorzugt stellt man eine Gesamtmenge an Edelmetall im Bereich von 0,01 Gew.-% bis 10 Gew.-%, insbesondere bevorzugt 0,1 Gew.-% bis 5 Gew.-%, besonders bevorzugt 0,2 Gew.-% bis 2 Gew.-% bereit, welche mit dem ersten oxidischen Träger in Schritt c) in Kontakt gebracht wird, bezogen auf eine Gesamtmenge von 100 Gew.-% aus erstem oxidischen Trägermaterial und Edelmetall. Die Gesamtmenge an Edelmetall, welche in der erfindungsgemäß hergestellten katalytisch wirksamen Zusammensetzung enthalten ist, liegt somit in Bereichen, die auch im Stand der Technik beschrieben sind. Der Unterschied zum Stand der Technik besteht im Herstellungsverfahren, bei dem die Konzentration an Edelmetall in der Lösung, in der sie bereit gestellt wird, 0,01 Gew.-% oder weniger, bevorzugt 0,008 Gew.-% oder weniger, besonders bevorzugt 0,007 Gew.-% oder weniger beträgt. Dies führt zur Herstellung einer Zusammensetzung, welche gegenüber dem Stand der Technik über eine größere Anzahl an katalytisch aktiven Edelmetallzentren an der Oberfläche verfügt. Überraschenderweise hat sich gezeigt, dass die Konzentration der Edelmetallsalzlösung entscheidend ist, um eine gegenüber dem Stand der Technik größere CO-Oberfläche und somit eine verbesserte katalytische Aktivität einer katalytisch wirksamen Zusammensetzung zu erhalten.

Erfindungsgemäß ist es möglich, das erste oxidische Trägermaterial mit einem Edelmetallsalz in Kontakt zu bringen. Es ist jedoch ebenfalls möglich das Trägermaterial mit zwei, drei oder mehreren Edelmetallsalzen in Kontakt zu bringen. Dabei ist das Edelmetallsalz/sind die Edelmetallsalze bevorzugt ausgewählt aus der Gruppe der Salze der Platingruppenmetalle, besonders bevorzugt aus der Gruppe, die aus den Salzen von Platin, Palladium und Rhodium besteht. Das Edelmetall/die Edelmetalle wird/werden vorzugsweise in Form seines/ihrer Nitratsalze(s) verwendet. Diese sind kostengünstig zu erhalten und können einfach verarbeitet werden.

Es hat sich gezeigt, dass Platingruppenmetalle und insbesondere Platin, Palladium und Rhodium besonders wirksam unterschiedlichste Verfahren katalysieren. Bei der Verwendung in einem Katalysator zur Nachbehandlung von Abgasen aus Verbrennungsmotoren hat sich gezeigt, dass Platin und/oder Rhodium in der Zusammensetzung einen schnellen Ein- und Ausbau von Sauerstoff in einem geeigneten ersten oxidischen Trägermaterial, wie Cer-Zirkonium-Oxid, ermöglichen. Kommt das zu behandelnde Abgas mit der erfindungsgemäß hergestellten Zusammensetzung in Kontakt, so können Stickoxide rasch reduziert werden, in dem der Sauerstoff aus dem Reaktionsgleichgewicht entfernt und im Sauerstoffspeicher gespeichert wird.

Palladium sorgt hingegen für einen langsameren Ein- und Ausbau von Sauerstoff in einem geeigneten ersten oxidischen Trägermaterial, wie Cer-Zirkonium-Oxid. Durch den Einsatz von Palladium wird jedoch die Sauerstoffspeicherkapazität des oxidischen Trägermaterials erhöht.

Um eine homogene Verteilung an aktiven Edelmetallzentren auf dem oxidischen Trägermaterial zu erhalten, ist es bevorzugt, dass bei der Herstellung der Suspension in Schritt c) eine Flüssigkeit eingesetzt wird, in der sowohl das erste als auch das zweite oxidische Trägermaterial eine Suspension ausbilden. Mit dieser Flüssigkeit sollte die Edelmetallsalzlösung zudem in jedem beliebigen Verhältnis mischbar sein. Bevorzugt wird daher zur Herstellung der Suspension eine hydrophile Flüssigkeit, insbesondere Wasser verwendet. In Wasser kann eine Suspension aus oxidischen Trägermaterialen gut und einfach hergestellt werden. Die bevorzugten Edelmetallsalze sind in Wasser löslich, so dass eine wässrige Lösung in Schritt b) bereitgestellt werden kann. Somit ist eine Mischbarkeit der Edelmetallsalzlösung mit der Flüssigkeit der Suspension in jedem beliebigen Verhältnis gegeben. Zudem ist Wasser kostengünstig. Ungewünschte Nebenreaktionen können nahezu vollständig ausgeschlossen werden.

Das Inkontaktbringen in Schritt c) des erfindungsgemäßen Verfahrens erfolgt beispielsweise dadurch, dass die Edelmetallsalzlösung zu einer Suspension des ersten oxidischen Trägermaterials in einem hydrophilen Lösungsmittel gegeben wird und diese Mischung dann gerührt wird. Es ist jedoch auch möglich die Edelmetallsalzlösung auf das erste oxidische Trägermaterial aufzusprühen oder das erste oxidische Trägermaterial zu einer Edelmetallsalzlösung zu geben und diese Mischung dann zu rühren. Vorzugsweise werden nach Schritt d) und insbesondere nach Schritt c) und nach Schritt d) die erhaltenen Suspensionen über einen Zeitraum von einer Stunde bis zu 30 Stunden gerührt.

Vorzugsweise wird der pH-Wert der Suspension in Schritt c) des erfindungsgemäßen Verfahrens auf einen Bereich von 4 bis 10 eingestellt. In einer bevorzugten Ausführungsform wird der pH-Wert in einen Bereich von 4 bis 7, insbesondere in einen Bereich von 4,5 bis 6,5 eingestellt. In einer alternativen ebenso bevorzugten Ausführungsform wird der pH-Wert in einen Bereich von 7,5 bis 10, insbesondere in einen Bereich von 7,5 bis 8,5 eingestellt. Liegt der pH-Wert außerhalb dieser Bereiche, können Trägermaterialien, auf die die nach dem erfindungsgemäßen Verfahren hergestellte Zusammensetzung zur Verwendung gegebenenfalls aufgebracht wird, angegriffen werden.

Überraschenderweise hat sich gezeigt, dass in diesen pH-Wert Bereichen ein besonders effektives Aufziehen des Edelmetallsalzes auf den ersten oxidischen Träger während des Inkontaktbringens erfolgt. Hierdurch kann sichergestellt werden, dass das Edelmetallsalz/die Edelmetallsalze gut auf dem ersten oxidischen Trägermaterial haftet/haften. Außerhalb des erfindungsgemäßen pH-Bereiches ist es möglich, dass das Edelmetallsalz/die Edelmetallsalze sich wieder von dem oxidischen Träger ablöst/ablösen.

Dabei ist es erfindungsgemäß möglich, den pH-Wert der Suspension erst nach dem Inkontaktbringen der Edelmetallsalzlösung mit dem ersten oxidischen Trägermaterial zu regulieren. Es ist erfindungsgemäß ebenfalls möglich, dass zunächst der pH-Wert der Edelmetallsalzlösung eingestellt wird, bevor diese mit dem Trägermaterial in Kontakt gebracht wird. Erfindungsgemäß auch umfasst ist, dass eine Suspension aus Trägermaterial und Lösungsmittel zunächst auf einen bestimmten pH-Wert eingestellt werden und dann die Edelmetallsalzlösung zu der Suspension gegeben wird.

Dabei kann der pH-Wert der Suspension mit an sich bekannten Mitteln, insbesondere mit Ammoniak und/oder einer wässrigen Natriumcarbonatlösung eingestellt werden. Vorzugsweise wird der pH-Wert der Suspension mit einer wässrigen Natriumcarbonatlösung eingestellt. Überraschenderweise hat sich gezeigt, dass in diesem Fall die CO-Oberfläche des Katalysators einen Wert von 10 m²/g oder mehr, insbesondere von 12 m²/g oder mehr beträgt.

Das erfindungsgemäße Verfahren kann dabei bei Raumtemperatur, also bei einer Temperatur von 20 °C durchgeführt werden. Die Schritte a) bis d) können jedoch ebenso bei einer gegenüber Raumtemperatur verringerten oder erhöhten Temperatur durchgeführt werden. Vorzugsweise liegt die Temperatur im Bereich von 10 °C bis 90 °C, insbesondere im Bereich von 15 °C bis 50 °C, ganz besonders im Bereich von 20 °C bis 40 °C. Bevorzugt findet die Reaktion bei Raumtemperatur statt, da hier Kosten für eine Temperaturänderung beispielsweise durch Kühl- oder Heizvorrichtungen, nicht anfallen. Limitierender Faktor bei der Wahl der Temperatur ist die Auswahl der Flüssigkeit, mit der die Suspension in Schritt c) hergestellt wird sowie die Auswahl der Edelmetallsalzlösung. Weder die Flüssigkeit der Suspension noch das Lösungsmittel der Edelmetallsalzlösung sollten bei der Temperatur verdampfen.

In Schritt d) des erfindungsgemäßen Verfahrens wird ein zweites oxidisches Trägermaterial in die in Schritt c) erhaltene Suspension eingebracht. Dabei kann das zweite oxidische Trägermaterial von dem in der Suspension bereits enthaltenen ersten oxidischen Trägermaterials verschieden sein. Es ist jedoch auch möglich, das gleiche Trägermaterial, wie es in Schritt a) bereitgestellt wird, in Schritt d) einzusetzen. Die Wahl des ersten und/oder zweiten oxidischen Trägermaterials erfolgt dabei in Abhängigkeit von der Auswahl des jeweils anderen und von der späteren Verwendung der nach dem erfindungsgemäßen Verfahren erhaltenen Zusammensetzung.

Die in Schritt d) erhaltene Suspension kann filtriert werden. Durch die Filtration kann überschüssige Flüssigkeit entfernt werden. Üblicherweise werden katalytisch aktive Zusammensetzungen vor ihrer Verwendung auf Trägermaterialen aufgebracht. Um eine wirtschaftliche Beschichtung der Trägermaterialien mit der Zusammensetzung zu ermöglichen, sollte der Feststoffgehalt der Suspension im Bereich von 20 bis 40 Gew.-% liegen. Im erfindungsgemäßen Verfahren ist die Feststoffkonzentration der Suspension in Schritt d) deutlich geringer. Durch die Filtration kann der Feststoffgehalt auf den für eine wirtschaftliche Beschichtung benötigten Bereich angehoben werden.

In bestimmten Anwendungen kann auch die Teilchengröße des ersten und/oder zweiten oxidischen Trägermaterials relevant sein. In diesen Fällen kann durch eine Filtration der Suspension eine Größenauswahl des ersten und/oder zweiten oxidischen Trägermaterials erreicht werden.

Soll die erfindungsgemäß hergestellte Zusammensetzung zur Nachbehandlung von Abgasen aus Verbrennungsmotoren eingesetzt werden, hat sich überraschenderweise gezeigt, dass bei einer Teilchengröße d90 im Bereich von 10 µm bis 35 µm, bevorzugt im Bereich von 15 µm bis 30 µm, besonders bevorzugt im Bereich von 19 µm bis 24 µm der erfindungsgemäß hergestellten Zusammensetzung die Abgase aus Verbrennungsmotoren besonders gut abgebaut werden. Insbesondere bei mageren Bedingungen kann der Ausstoß an Kohlenwasserstoffen, Kohlenstoffmonoxid und Stickoxiden deutlich gegenüber Zusammensetzungen, welche Teilchengrößen von weniger als 10 µm aufweisen, verringert werden. Bei fettem Motorbetrieb sinkt insbesondere der Ausstoß an Kohlenstoffmonoxid deutlich ab. Gleichzeitig kann auch der Ausstoß an Kohlenstoffdioxid gering gehalten werden. Mit d90 wird die Partikelgröße bezeichnet, für die 90% der Partikel kleiner als der Wert d90 sind.

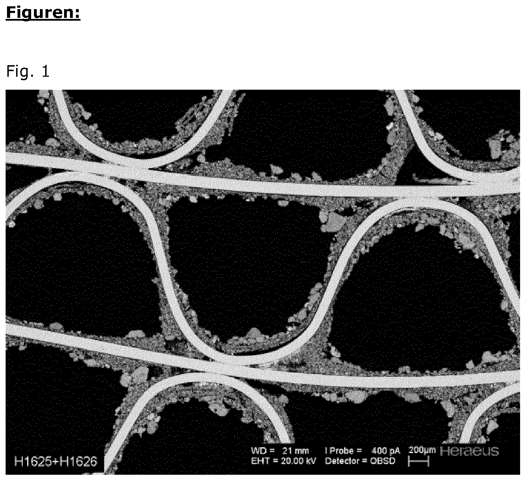

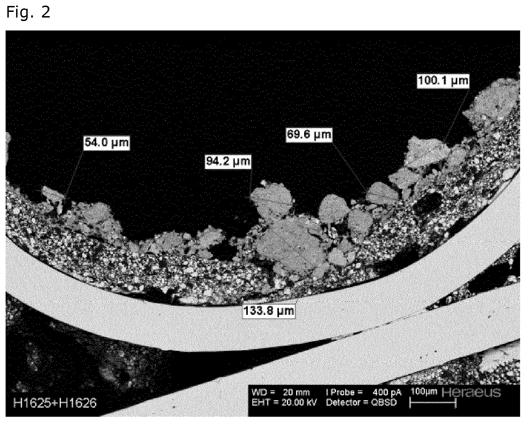

Beträgt die Teilchengröße d90 mehr als 35 µm, so ist eine Verwendung in einem Katalysator nicht mehr vorteilhaft. Bei der Beschichtung eines Katalysatorträgers mit einer Zusammensetzung mit einer entsprechend großen Teilchengröße, liegen die Teilchen nicht mehr verzahnt miteinander vor. Vielmehr kommt es zu einer Ausbildung von Agglomeraten. Hierfür wurde eine erste erfindungsgemäß hergestellte Zusammensetzung auf einen Katalysatorträger aufgebracht. Anschließend wurde auf diese eine zweite erfindungsgemäß hergestellte katalytisch wirksame Zusammensetzung auf den Katalysatorträger aufgebracht. Fig. 1 zeigt eine Rasterelektronenmikroskopische (REM)-Aufnahme, bei der die zweite katalytisch wirksame Zusammensetzung eine Teilchengröße d90 von mehr als 35 µm aufweist. In Fig. 2 ist die Teilchengröße der einzelnen Partikel in der zweiten Schicht erkennbar. Fig. 2 stellt einen Ausschnitt aus Fig. 1 dar.

Darüber hinaus kann die Teilchengröße der Zusammensetzung auch über die d50 und die d10 Partikelgröße definiert werden. Hier sind entsprechend 50% bzw. 10% der Partikel kleiner als der entsprechende Wert. Die Begriffe "Partikel" und "Teilchen" werden synonym verwendet. Bevorzugt weist die Zusammensetzung eine Teilchengröße d50 im Bereich von 2,5 µm bis 11,5 µm, bevorzugt von 4 µm bis 10 µm, besonders bevorzugt von 5,5 µm bis 8,5 µm auf. Weiter bevorzugt weist sie eine Teilchengröße d10 im Bereich von 1 µm bis 4 µm, bevorzugt von 1 µm bis 2 µm, besonders bevorzugt von 1,0 µm bis 1,8 µm auf. Die Teilchengröße der oxidischen Trägermaterialien wurde entsprechend der Teilchengröße von γ-Al₂O₃ bestimmt.

Das erfindungsgemäße Verfahren ermöglicht somit die Herstellung einer katalytisch wirksamen Zusammensetzung. Die erfindungsgemäß hergestellte Zusammensetzung weist eine CO-Oberfläche von 6 m²/g oder mehr, bevorzugt von 7 m²/g oder mehr, besonders bevorzugt von 7,5 m²/g oder mehr auf. Katalytisch wirksame Zusammensetzungen mit einer solch großen CO-Oberfläche sind aus dem Stand der Technik nicht bekannt. Die große CO-Oberfläche ermöglicht dabei eine gegenüber aus dem Stand der Technik bekannten Katalysatoren bessere Umsetzung.

Die erfindungsgemäß hergestellte katalytisch wirksame Zusammensetzung kann beispielsweise in einem Katalysator zur Behandlung von Abgasen aus Verbrennungsmotoren eingesetzt werden. Bei der Abgasnachbehandlung von Verbrennungsmotoren werden häufig Mehrschichtkatalysatoren eingesetzt.

Solche Mehrschichtkatalysatoren sind im Stand der Technik grundsätzlich beschrieben. So beschreibt beispielsweise DE 10 024 994 A1 einen Katalysator, bei welchem die Edelmetalle in getrennten Schichten auf einen Träger aufgebracht werden. Der Katalysator umfasst eine erste Überzugsschicht, gebildet auf einer hitzebeständigen Unterlage, und eine zweite Überzugsschicht, gebildet auf der ersten Überzugsschicht. Die erste Überzugsschicht beinhaltet Aluminiumoxid, welches Palladium trägt; die zweite Überzugsschicht beinhaltet Cer-Zirkonium-Komplexoxide, die sowohl Platin als auch Rhodium tragen.

Zur Verbesserung des Abbaus von Abgasen in einem Katalysator beschreibt WO 98/09726 A1 eine Beschichtung für einen Katalysator, welche einen ersten Träger für eine erste Edelmetallkomponente und einen zweiten Träger für eine zweite Edelmetallkomponente aufweist, in welcher die durchschnittliche Teilchengröße des zweiten Trägers größer ist als die durchschnittliche Teilchengröße des ersten Trägers. Hierdurch sollen unterschiedliche Edelmetalle im Betrieb des Katalysators voneinander getrennt vorliegen. Hierfür werden die jeweiligen Edelmetallkomponenten auf ihren Trägern fixiert und anschließend auf die gewünschte Größe gemahlen. Die so erhaltenen Fritten werden auf ein Substrat aufgetragen, wodurch man eine Schicht erhält, welche im unteren Bereich insbesondere die kleineren Partikel und im oberen Bereich insbesondere die größeren Partikel aufweist.

Unterschiedliche Größenverteilungen in einer katalytisch aktiven Schicht sind auch aus EP 0556554 A2 bekannt. Hier umfasst die Beschichtungsdispersion, welche auf einen Katalysator aufgebracht werden kann, Feststoffe mit einer mehrmodalen Korngrößenverteilung mit verschiedenen Kornfraktionen.

Überraschenderweise hat sich gezeigt, dass ein Katalysator, der die erfindungsgemäß hergestellte Zusammensetzung aufweist, bei der Abgasnachbehandlung von Verbrennungsmotoren für einen geringeren Ausstoß an Stickoxiden, Kohlenmonoxid und Kohlenwasserstoffen führt.

Die erfindungsgemäß hergestellte Zusammensetzung kann in einem Mehrschichtkatalysator (4) für die Abgasnachbehandlung von Verbrennungsmotoren verwendet werden. Ein entsprechender Mehrschichtkatalysator (4) für die Abgasnachbehandlung von Verbrennungsabgasen umfasst eine Trägerstruktur (3), die Kanäle zur Durchführung von Gasen aufweist, wobei zumindest ein Teil der Kanäle einen in Strömungsrichtung der Abgase stromaufwärts befindlichen Abgaseinlass und einen stromabwärts befindlichen Gasauslass aufweist, und wobei zumindest ein Teil der Kanäle eine wenigstens auf der Innenseite aufgebrachte erste Schicht (1), und eine wenigstens teilweise die erste Schicht bedeckende zweite Schicht (2) aufweist, wobei die erste Schicht (1) und/oder die zweite Schicht (2) eine erfindungsgemäß hergestellte katalytisch wirksame Zusammensetzung umfassen. Bevorzugt umfassen die erste Schicht (1) und die zweite Schicht (2) jeweils die erfindungsgemäß hergestellte Zusammensetzung, insbesondere bestehen sie aus dieser. Dabei können die erste Schicht (1) und die zweite Schicht (2) eine gleiche oder voneinander verschiedene Zusammensetzungen aufweisen. Ein Mehrschichtkatalysator (4), in welchem die erste Schicht (1) und die zweite Schicht (2) voneinander verschiedene Zusammensetzungen aufweisen, ist bevorzugt, da hier die Zusammensetzungen der Schichten entsprechend ihrer Aufgaben ausgewählt werden können. Dabei sind beide Schichten vorzugsweise unter Verwendung einer erfindungsgemäß hergestellten Zusammensetzung hergestellt.

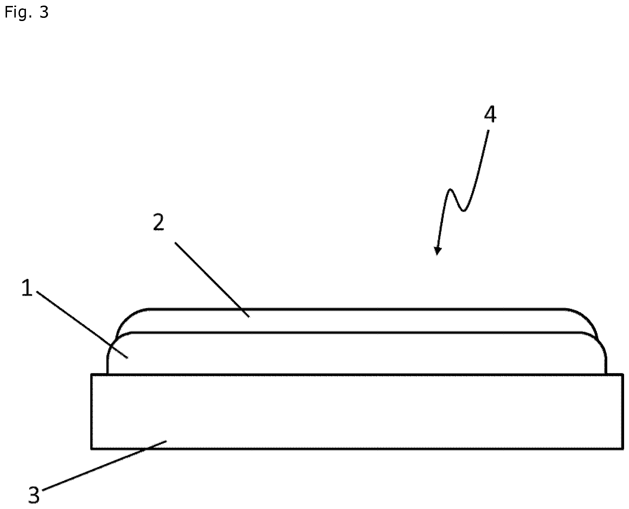

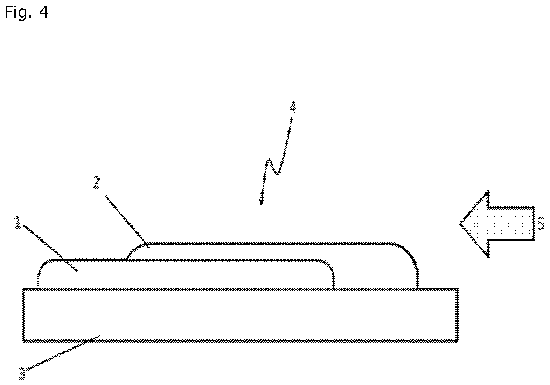

Fig. 3 zeigt schematisch den Aufbau eines Mehrschichtkatalysators (4) mit der Trägerstruktur (3), der ersten Schicht (1) und der zweiten Schicht (2). Fig. 4 zeigt eine bevorzugte Ausführungsform. Hier stellt der Pfeil (5) die Strömungsrichtung des zu behandelnden Abgases dar.

Wird im Folgenden die erste Schicht (1) beschrieben, so ist hierunter die erste katalytisch wirksame Schicht zu verstehen. Gleiches gilt für die zweite Schicht (2), welche die zweite katalytisch wirksame Schicht (2) bezeichnet. Mit "Zusammensetzung der ersten Schicht (1)" wird die erfindungsgemäß hergestellte katalytisch wirksame Zusammensetzung, welche als erste Schicht (1) auf die Trägerstruktur aufgebracht wird, bezeichnet. Mit "Zusammensetzung der zweiten Schicht (2)" wird die erfindungsgemäß hergestellte katalytisch wirksame Zusammensetzung, welche als zweite Schicht (2) auf die Trägerstruktur aufgebracht wird, bezeichnet.

Ein Mehrschichtkatalysator (4) führt nicht nur zu einem verbesserten Abbau der Schadstoffe aus dem Abgas. Darüber hinaus ist die Light-off Temperatur, bei der der Umsatz an Kohlenwasserstoffen HC, Kohlenstoffmonoxid CO und Stickoxiden NOₓ 50 % beträgt, geringer. Dies ist sowohl bei fetten als auch bei mageren Motorbedingungen der Fall, wie aus den nachfolgenden Tabellen 3 und 4 hervorgeht.

In Tabelle 3 sind die Zusammensetzungen jeweils der ersten Schicht (1) und der zweiten Schicht (2) eines Mehrschichtkatalysators (4) angegeben. Darüber hinaus ist in Spalte 2 die Gesamtmenge an Edelmetallen, die insgesamt in dem Katalysator vorhanden ist, angegeben. Hierunter ist die Gesamtmenge an allen Edelmetallen, die insgesamt sowohl in der ersten als auch in der zweiten Schicht vorhanden sind, zu verstehen. Dabei erfolgt die Angabe in Gew.-% bezogen auf 100 Gew.-% der Summe aus 1. und 2. Zusammensetzung.

In der 5. Spalte ist die Zusammensetzung der ersten Schicht beschrieben. Diese weist wenigstens ein erstes Edelmetallsalz, einen ersten oxidischen Träger (erstes oxidisches Trägermaterial) und einen zweiten oxidischen Träger (zweites oxidisches Trägermaterial) auf. In der 6. Spalte ist dann die zweite Schicht beschrieben, welche ebenfalls wenigstens ein Edelmetallsalz sowie einen ersten und einen zweiten oxidischen Träger (Trägermaterial) aufweist. Ist in der nachfolgenden Tabelle nur ein oxidischer Träger genannt, so sind der erste oxidische Träger und der zweite oxidische Träger gleich. Bei unterschiedlichen Materialien sind diese mit einem "+" voneinander getrennt. Die Zuordnung der Trägermaterialien ergibt sich aus Tabelle 2. In Klammern ist jeweils der Anteil der Trägermaterialien in Gew.-% angegeben, bezogen auf 100 Gew.-% der Zusammensetzung der ersten Schicht (1) beziehungsweise der zweiten Schicht (2). Zu 100 Gew.-% fehlende Anteile entsprechen dem Anteil an Bindemittel in der Zusammensetzung. Bindemittel ist in diesem Falle gamma-Aluminiumoxid (γ-Al₂O₃). Dabei kann auch eine Verbindung eingesetzt werden, welche im Laufe des Herstellungsverfahrens zu γ-Al₂O₃ umgesetzt wird. Beispielsweise kann Boehmit als Bindemittel eingesetzt werden. Als Edelmetallsalz wurde das Nitrat-Salz der jeweils angegebenen Edelmetalle eingesetzt.

In der dritten Spalte ist die Gesamtmenge an 1. und 2. Zusammensetzung angegeben, die auf die Trägerstruktur (3) aufgebracht wird. Die Angabe erfolgt hier in Gramm an 1. und 2. Zusammensetzung pro Liter Leervolumen der Trägerstruktur (3). In Spalte 4 ist das Massenverhältnis der Edelmetalle Pt:Pd:Rh angegeben. Die Zusammensetzung der ersten Schicht (1) und der zweiten Schicht (2) wurden erfindungsgemäß hergestellt.

**Tabelle 3:**

| Katalysator | Gesamtbeschichtungsmenge Edelmetalle (Pt+Rh+Pd) | Menge an 1. und 2. Zusammensetzung [g/L] | Massenverhältnis der Edelmetalle Pt:Pd:Rh | 1. Schicht (Edelmetall/1. Oxidischer Träger [Gew.-%]+2. Oxidischer Träger [Gew.-%]) | 2. Schicht (Edelmetall/1. Oxidischer Träger [Gew.-%]+2. Oxidischer Träger [Gew.-%]) |
|---|---|---|---|---|---|
| Kat. 5 | 1,41 Gew.-% | 150 | 2:35:3 | Pd / Nr. 3 (26) + Nr. 2 (74) | PtRh / Nr. 4 (100) |
| Kat. 6 | 1,06 Gew.-% | 150 | 2:35:3 | Pd / Nr. 3 (30) + Nr. 2 (70) | PtRh / Nr. 1 (100) |
| Kat. 7 | 1,06 Gew.-% | 150 | 2:35:3 | Pd / Nr. 3 (30) + Nr. 2 (70) | PtRh / Nr. 1 (100) |
| Kat. 8 | 1,41 Gew.-% | 150 | 2:35:3 | Pd / Nr. 3 (25) + Nr. 2 (70) | PtRh / Nr. 4 (100) |
| Kat. 9 | 1,06 Gew.-% | 150 | 2:35:4 | Pd / Nr. 3 (30) + Nr. 2 (70) | PtRh / Nr. 1 (100) |
| Kat. 10 | 1,41 Gew.-% | 150 | 2:35:4 | Pd / Nr. 3 (26) + Nr. 2 (74) | PtRh / Nr. 4 (100) |
| Kat. 11 | 1,06 Gew.-% | 150 | 2:35:4 | Pd / Nr. 3 (30) + Nr. 2 (70) | PtRh / Nr. 1 (100) |
| Kat. 12 | 1,41 Gew.-% | 150 | 2:35:4 | Pd / Nr. 3 (25) + Nr. 2 (70) | PtRh / Nr. 4 (100) |

Die Mehrschichtkatalysatoren (4), mit den in Tabelle 3 gezeigten Zusammensetzungen, wurden hinsichtlich ihrer katalytischen Fähigkeiten bei der Nachbehandlung von Verbrennungsabgasen untersucht. In Tabelle 4 sind die Ergebnisse der Abgasmessungen gezeigt. Die Bestimmung der Abgaswerte in allen Beispielen erfolgte gemäß der Euro-3 Norm (Prüfzyklus: Zyklus der Verordnung ECE R40). Die Abgaswerte werden daher in % Umsatz angegeben.

**Tabelle 4:**

| Zusammensetzung | Motorbedingungen | Abgaswerte [%-Umsatz] (simulierter Zyklus) | | | | Light-off Temperatur [°C] (50% Umsetzung) | | |
|---|---|---|---|---|---|---|---|---|
| | | NO | CO | HC | Temperatur [°C] | HC | CO | NO |
| Kat. 5* | mager | 51 | 77 | 85 | 250 | 243 | 222 | -- |
| Kat. 6* | mager | 36 | 55 | 40 | 250 | 268 | 245 | -- |
| Kat. 7 | mager | 21 | 42 | 30 | 250 | 268 | 256 | -- |
| Kat. 8 | mager | 51 | 73 | 66 | 250 | 280 | 248 | -- |
| Kat. 9* | fett | 42 | 74 | 73 | 300 | 333 | 322 | 270 |
| Kat. 10* | fett | 46 | 74 | 94 | 300 | 300 | 246 | 241 |
| Kat. 11 | fett | 31 | 72 | 72 | 300 | 351 | 355 | 312 |
| Kat. 12 | fett | 48 | 74 | 82 | 300 | 334 | 342 | 265 |

| | | | | | | | | |
|---|---|---|---|---|---|---|---|---|
| * erfindungsgemäß hergestellte erste Zusammensetzung im Katalysator | | | | | | | | |

Im mageren Betrieb des Motors werden nicht alle Stickoxide abgebaut, da die benötigten Reduktionsmittel schon vorher oxidiert werden. Eine Bestimmung der Light-off Temperatur ist daher hier nicht möglich. Die Abgaswerte werden in % Umsatz angegeben. Die Messung erfolgt im simulierten Zyklus. Durch Simulation des realen Fahrzyklus ist eine Änderung der Abgaszusammensetzung im Sekundentakt möglich. Je höher der erreichte Umsatz, desto besser ist das Ergebnis.

Überraschenderweise hat sich gezeigt, dass mit einem unter Verwendung einer erfindungsgemäß hergestellten Zusammensetzung hergestellten Katalysator (Katalysatoren 5 und 6, 9 und 10) die Umsetzung der im Abgas enthaltenen Schadstoffe höher ist, als in konventionellen Katalysatoren (Katalysatoren 7 und 8, 11 und 12). Ebenso ist die Light-off Temperatur, bei der 50 % der Schadstoffe im Abgas, nämlich Stickoxide NOₓ, Kohlenmonoxid CO und Kohlenwasserstoffe HC, umgesetzt sind, bei einem unter Verwendung einer erfindungsgemäß hergestellten Zusammensetzung hergestellten Katalysator geringer als bei einem aus dem Stand der Technik bekannten Katalysator.

Die größere CO-Oberfläche der erfindungsgemäß hergestellten Zusammensetzung und des daraus erhaltenen Katalysators ist dabei ein Indikator für eine höhere Anzahl aktiver EdelmetallZentren, insbesondere Pd-Zentren, beziehungsweise einer größeren aktiven EdelmetallOberfläche, wodurch die Oxidationsaktivität von Abgasemissionen, insbesondere von CO-Emissionen, gesteigert ist. Dies ist insbesondere bei vergaserbetriebenen Motorrädern wichtig, die teils extreme Lambdaschwankungen im Abgas aufweisen und somit teils hohe CO-Emissionsspitzen erzeugen, die möglichst effizient abzufangen sind. Die Edelmetallzentren entstehen durch Reduktion der bereitgestellten Edelmetallsalze bei der Herstellung des Katalysators.

Überraschenderweise hat sich gezeigt, dass eine erfindungsgemäß hergestellte Zusammensetzung zudem eine große Sauerstoffspeicherkapazität aufweist. Die Sauerstoffspeicherkapazität wird nach dem eingangs beschriebenen Verfahren bestimmt. Weist eine Zusammensetzung eine große Sauerstoffspeicherkapazität auf, so ist sie in der Lage bei der Abgasnachbehandlung von Verbrennungsmotoren auch größere Lambdaschwankungen auszugleichen. Zur Bestimmung der Sauerstoffspeicherkapazität wurde ein Mehrschichtkatalysator (4) hergestellt, in dem die erste Schicht (1) auf der Trägerstruktur (3) eine erfindungsgemäß hergestellte Zusammensetzung enthält. Die zweite Schicht (2) enthält eine katalytisch aktive Zusammensetzung, welche Platin und Rhodium umfasst.

In der nachfolgenden Tabelle 5 sind die jeweiligen Mehrschichtkatalysatoren in ihrer Zusammensetzung beschrieben. Die Zusammensetzung der oxidischen Träger ist in Tabelle 2 dargestellt. Angegeben ist in Klammern jeweils der Anteil in Gew.-%. Zu 100 Gew.-% (100 Gew.-% entsprechen der Zusammensetzung der ersten Schicht (1) beziehungsweise der zweiten Schicht (2)) fehlende Angaben entsprechen einem Bindemittel, welches in Form von γ-Al₂O₃ vorliegen kann. Das Bindemittel kann auch ein Boehmit umfassen, welcher beim Herstellungsverfahren des Mehrschichtkatalysators (4) in γ-Al₂O₃ umgewandelt wird.

In Spalte 2 ist weiterhin die Gesamtbeschichtungsmenge an Edelmetallen angegeben. Die Angabe in Gew.-% bezieht sich auf 100 Gew.-% für die Summe aus erster und zweiter Zusammensetzung für die erste beziehungsweise zweite Schicht. Aus der in Spalte 5 angegebenen Konzentration geht hervor, dass es sich bei den Katalysatoren 15 und 16 um unter Verwendung einer erfindungsgemäß hergestellten Zusammensetzung hergestellte Katalysatoren handelt. Bei den unter Verwendung einer erfindungsgemäß hergestellten Zusammensetzung hergestellten Katalysatoren wurde sowohl die erste Schicht (1) als auch die zweite Schicht (2) unter Anwendung des erfindungsgemäßen Verfahrens hergestellt. Angegeben ist die Konzentration der Edelmetalle in der jeweiligen Edelmetallsalzlösung. So betrug beispielsweise im Katalysator 13 die Konzentration an Palladium in der Edelmetallsalzlösung 7 Gew.-%. Die Konzentration an Platin und Rhodium in der Edelmetallsalzlösung zur Herstellung der zweiten Schicht betrug ebenfalls 7 Gew.-%. Die Angaben zu den weiteren Katalysatoren sind entsprechend angegeben. Die Sauerstoffspeicherkapazität wurde nach dem oben beschriebenen Verfahren bestimmt. Die Angabe erfolgt in µmol CO pro Gramm katalytisch aktiver Zusammensetzung.

**Tabelle 5:**

| Katalysator | Gesamtbeschichtungsmenge an Edelmetallen (Pt+Pd+Rh) [Gew.-%] | 1. Schicht (Edelmetall / 1. Oxidischer Träger [Gew.-%] + 2. Oxidischer Träger [Gew.-%]) | 2. Schicht (Edelmetall / 1. Oxidischer Träger [Gew.-%] + 2. Oxidischer Träger [Gew.-%]) | Konzentration an Edelmetall in der Edelmetallsalzlösung | Sauerstoffspeicherkapazität [µmol/g] |
|---|---|---|---|---|---|
| Kat.13 | 1,41 | Pd / Nr. 2 (25) + Nr. 3 (70) | PtRh / Nr. 4 (100) | 7 Gew.-% | 537 |
| Kat.14 | 1,41 | Pd / Nr. 2 (25) + Nr. 3 (70) | PtRh / Nr. 4 (100) | 0,035 Gew.-% | 568 |
| Kat.15* | 1,41 | Pd / Nr. 2 (25) + Nr. 3 (70) | PtRh / Nr. 4 (100) | 0,007 Gew.-% | 729 |
| Kat.16* | 1,41 | Pd / Nr. 2 (25) + Nr. 3 (70) | PtRh / Nr. 4 (100) | 0,0035 Gew.-% | 835 |

| | | | | | |
|---|---|---|---|---|---|
| * unter Verwendung einer erfindungsgemäß hergestellten Zusammensetzung hergestellter Katalysator | | | | | |

In einem unter Verwendung einer erfindungsgemäß hergestellten Zusammensetzung hergestellten Mehrschichtkatalysator ist die Gesamtschichtdicke aus erster Schicht (1) und zweiter Schicht (2) bevorzugt 100 µm oder weniger, besonders bevorzugt 50 µm oder weniger. Bei einer entsprechenden Gesamtschichtdicke kann das Abgas ungehindert durch den Katalysator strömen. Dabei kommt das Abgas immer noch ausreichend in Kontakt mit den katalytisch aktiven Zusammensetzungen der einzelnen Schichten. Die Gesamtschichtdicke ist die durchschnittliche Schichtdicke an der Wand der Trägerstruktur (3). Dabei werden nur die ebenen Flächen einer Wand bei der Bestimmung der Schichtdicke berücksichtigt. Bereiche, an denen zwei oder mehr Wände aufeinanderstoßen oder sich berühren, wodurch es zur Ausbildung von Hohlräumen mit einer Dreieck-ähnlichen Form kommt, finden bei der Bestimmung der Gesamtschichtdicke keine Berücksichtigung. Die Schichtdicke wurde per Rasterelektronenmikroskopie analysiert.

Bevorzugt weisen die erste Schicht (1) und die zweite Schicht (2) voneinander unterschiedliche erfindungsgemäß hergestellte katalytisch wirksame Zusammensetzungen auf. Im Mehrschichtkatalysator bedeckt die zweite Schicht (2) die erste Schicht (1) wenigstens teilweise. Vorzugsweise bedeckt die zweite Schicht (2) die Oberfläche der ersten Schicht (1) zu wenigstens 50%, vorzugsweise zu wenigstens 60 %, weiter vorzugsweise zu wenigstens 75 %, insbesondere zu wenigstens 85 %, speziell zu wenigstens 90 % oder 95 %. Strömt nun das zu behandelnde Abgas über die beiden Schichten, so kommt es zumindest in den überlappenden Bereichen zunächst mit der zweiten Schicht (2) in Kontakt. In Fig. 4 ist eine entsprechende Ausführungsform schematisch dargestellt.

In einer bevorzugten Ausführungsform umfasst der Mehrschichtkatalysator (4) für die Abgasnachbehandlung von Verbrennungsmotoren eine erfindungsgemäß hergestellte Zusammensetzung in der ersten Schicht (1), die Palladium als Edelmetall aufweist, und eine erfindungsgemäß hergestellte Zusammensetzung in der zweiten Schicht (2), die Platin und/oder Rhodium aufweist. Es hat sich gezeigt, dass die Wirkung der Edelmetalle bei der Umsetzung der Abgase besonders hoch ist, wenn diese in getrennten Schichten vorliegen. Insbesondere Palladium sollte von Platin und Rhodium getrennt vorliegen. Im Betrieb erwärmt sich der Katalysator. Hierdurch kann es zur Ausbildung von Aggregaten der Edelmetalle kommen. Insbesondere Palladium neigt zur Ausbildung von Aggregaten. Liegt Palladium gemeinsam mit Platin und/oder Rhodium in einer Schicht vor, so kommt es zur Ausbildung von Mischaggregaten, welche eine gegenüber den reinen Edelmetallen deutlich verringerte katalytische Aktivität aufweisen.

Soll unter Anwendung des erfindungsgemäßen Verfahrens ein Mehrschichtkatalysator (4) hergestellt werden, umfasst das Verfahren bevorzugt in Schritt b) das Bereitstellen einer Edelmetallsalzlösung, die 0,01 Gew.-% oder weniger, vorzugsweise 0,008 Gew.-% oder weniger, besonders vorzugsweise 0,007 Gew.-% oder weniger Palladium aufweist zur Herstellung einer ersten katalytisch aktiven Zusammensetzung. In einem ebenfalls bevorzugten Verfahren umfasst Schritt b) das Bereitstellen einer Edelmetallsalzlösung, die 0,01 Gew.-% oder weniger, vorzugsweise 0,008 Gew.-% oder weniger, besonders vorzugsweise 0,007 Gew.-% oder weniger Platin und/oder Rhodium aufweist, zur Herstellung einer zweiten katalytisch wirksamen Zusammensetzung.

Die erste Schicht (1) in einem Mehrschichtkatalysator (4) weist Palladium bevorzugt in einem Anteil von 0,05 Gew.-% bis 10,00 Gew.-%, insbesondere bevorzugt 0,10 Gew.-% bis 10,00 Gew.-%, ganz besonders bevorzugt 0,50 Gew.-% bis 5,00 Gew.-%, bezogen auf eine Gesamtzusammensetzung von 100 Gew.-% der ersten Schicht (1), auf.

Die zweite Schicht (2) weist Platin und/oder Rhodium bevorzugt in einem Anteil von 0,05 Gew.-% bis 2,00 Gew.-% insbesondere bevorzugt 0,1 Gew.-% bis 1,0 Gew.-%, ganz besonders bevorzugt 0,2 Gew.-% bezogen auf eine Gesamtzusammensetzung von 100 Gew.-% der zweiten Schicht (2), auf. Der Anteil an Platin und/oder Rhodium bezieht sich auf den gesamten Stoffinhalt der zweiten Schicht (2).

Die zweite Schicht (2) kann nur Platin, nur Rhodium oder Platin und Rhodium aufweisen. Liegen sowohl Platin als auch Rhodium vor, so liegt das Verhältnis von Platin zu Rhodium bevorzugt im Bereich von 1:5 bis 5:1, besonders bevorzugt 2:3.
Die zweite Schicht (2) kann beispielsweise ein Cer-Zirkonium-Oxid als erstes oxidisches Trägermaterial aufweisen. Dieses erfüllt im Katalysator die Aufgabe eines Sauerstoffspeichermaterials. Bei dem Cer-Zirkonium-Oxid handelt es sich bevorzugt um ein Cer-reiches Cer-Zirkonium-Oxid, bei welchem der Anteil an Cer-Oxid CeO₂ bezogen auf das gesamte Oxid wenigstens 50 Gew.-% beträgt und der Anteil an Zirkonium-Oxid ZrO₂ geringer ist als der Anteil an Cer-Oxid CeO₂. Das Sauerstoffspeichermaterial kann einen Anteil im Bereich von 50 Gew.-% bis Gew.-80% CeO₂ und einen Anteil im Bereich von 10 Gew.-% bis 40 Gew.-% ZrO₂, insbesondere von 60 Gew.-% CeO₂ und von 30 Gew.-% ZrO₂ umfassen, jeweils bezogen auf eine Gesamtzusammensetzung von 100 Gew.-% der zweiten Schicht (2), also den gesamten Stoffgehalt der zweiten Schicht (2).

Die thermische Stabilität des Sauerstoffspeichermaterials ist für die Umsatzrate, die durch den Mehrschichtkatalysator (4) erreicht wird, relevant. Bei dem Sauerstoffspeichermaterial handelt es sich um ein poröses Material. Auch reines Cer-Oxid weist eine poröse Struktur auf. Auf das Sauerstoffspeichermaterial wird das Edelmetall aufgebracht. Im Betrieb strömt nun das Abgas auf das Sauerstoffspeichermaterial der katalytisch wirksamen Schicht (1, 2). Durch die poröse Oberfläche kommt es zu Turbulenzen in den Strömungen, was zu einem verbesserten Kontakt zwischen katalytisch wirksamer Schicht und den zu behandelnden Abgasen führt.

Ist die Porengröße des Sauerstoffspeichermaterials zu klein, strömt das Abgas entlang der Oberflächen des Sauerstoffspeichermaterials. Das katalytisch wirksame Edelmetall befindet sich jedoch nicht nur auf der Oberfläche sondern auch im Inneren des Sauerstoffspeichermaterials in dessen Poren. Dieses im Inneren befindliche Edelmetall steht bei zu kleiner Porengröße im Betrieb für die Behandlung des Abgases nicht zur Verfügung. Dabei sind vor allem das Porenvolumen und der Porenradius sowie die Größe der Öffnung der Poren entscheidend. Diese müssen sowohl bei der Herstellung als auch in Betrieb wenigstens teilweise erhalten bleiben und eine Mindestgröße aufweisen. Das Porenvolumen liegt üblicherweise im Bereich von 0,2 bis 10 ml/g, insbesondere im Bereich von 0,3 bis 0,8 ml/g. Die durchschnittlichen Porenradien betragen etwa 5 bis 20 nm, insbesondere 7 bis 12 nm.

Im Cer-Zirkonium-Oxid wird die Struktur des reinen Cer-Oxids durch das Zirkonium-Oxid aufgebrochen. Dies führt zu einer Änderung des Porenvolumens und des Porenradius des Sauerstoffspeichermaterials. Insbesondere wird die thermische Stabilität der Struktur erhöht. Auch im Betrieb bei Temperaturen von über 500 °C bleiben die Poren stabil. Im Betrieb steht daher die vollständige Menge an vorhandenem Edelmetall der Reaktion mit dem Abgas zur Verfügung. Es hat sich gezeigt, dass ein Anteil von wenigstens 10 Gew.-% Zirkonium-Oxid im Sauerstoffspeichermaterial für eine ausreichende, thermische Stabilität sorgt. Ein Anteil an Zirkonium-Oxid von über 45 Gew.-% führt zu einer Verringerung der Sauerstoffspeicherkapazität des Sauerstoffspeichermaterials.

Bei der Herstellung eines Mehrschichtkatalysators und/oder im Betrieb ist ein Katalysator hohen Temperaturbelastungen ausgesetzt. Um die Stabilität der Porenstruktur der Sauerstoffspeichermaterialien zu bestimmen, werden diese für eine Dauer von etwa 3 bis 8 Stunden einer Temperatur von 1000 °C ausgesetzt. Nach dieser Temperaturbehandlung wird die BET-Oberfläche bestimmt. Sauerstoffspeichermaterialien, welche aus Cer-Oxid und Zirkonium-Oxid bestehen, weisen nach einer Temperaturbehandlung von 1000 °C eine BET Oberfläche von 20 m²/g oder weniger auf.

Es hat sich jedoch gezeigt, dass sich die BET-Oberfläche der Sauerstoffspeichermaterialien einstellen lässt. Um eine größere BET-Oberfläche von 30 m²/g oder mehr nach einer Temperaturbehandlung bei 1000 °C zu erhalten, weist das Sauerstoffspeichermaterial der katalytisch wirksamen Zusammensetzung der zweiten Schicht (2) bevorzugt weiterhin ein oder mehrere Metalle ausgewählt aus der Gruppe bestehend aus Neodym, Praseodym, Lanthan und Hafnium auf. Die Metalle liegen bevorzugt in Form ihrer Oxide vor. Dabei kann der Anteil der jeweiligen Metalloxide 2 Gew.-% bis 10 Gew.-%, bevorzugt 3 Gew.-% bis 7 Gew.-% bezogen auf 100 Gew.-% des Sauerstoffspeichermaterials betragen.

Die Dotierung des Sauerstoffmaterials in dem genannten Bereich führt zu einer verbesserten thermischen Stabilität des Sauerstoffspeichermaterials. Liegt der Anteil darunter, ist kein Effekt sichtbar. Bei höheren Anteilen von über 10 Gew.-% wird die Stabilität nicht weiter erhöht. Weiterhin wird durch die Zugabe von Praseodym, Lanthan, Neodym und/oder Hafnium der Ein- und Ausbau von Sauerstoff in das Sauerstoffspeichermaterial beschleunigt.

In der nachfolgenden Tabelle 6 ist die jeweilige BET-Oberfläche unterschiedlicher Sauerstoffspeichermaterialien nach Temperaturbehandlung bei 1000 °C gezeigt. Die Sauerstoffspeichermaterialien Nr. 1 und Nr. 5 bestehen aus CeO₂ und ZrO₂. Diese weisen eine BET-Oberfläche von weniger als 20 m²/g auf. Durch die Dotierung mit Oxiden von Praseodym, Lanthan, Neodym und/oder Hafnium wird die BET-Oberfläche nach Temperaturbehandlung vergrößert. Die thermische Stabilität der Sauerstoffspeichermaterialien wird durch die Dotierung demnach erhöht. Das Sauerstoffspeichermaterial stellt ein oxidisches Trägermaterial dar. Das Sauerstoffspeichermaterial Nr. 1 entspricht dem oxidischen Trägermaterial Nr. 1 aus Tabelle 2.

**Tabelle 6:**

| Sauerstoffspeichermaterial | CeO₂ [Gew.%] | ZrO₂ [Gew.%] | Nd₂O₃ [Gew.%] | La₂O₃ [Gew.%] | Y₂O₃ [Gew.%] | Pr₆O₁₁ [Gew.%] | BET [m²/ g] |
|---|---|---|---|---|---|---|---|
| Nr. 1 | 60 | 30 | | 3 | | 7 | 49 |
| Nr. 6 | 70 | 30 | | | | | 17 |
| Nr. 7 | 56 | 39 | 5 | | | | 28 |
| Nr. 8 | 65 | 27 | | 8 | | | 30 |
| Nr. 9 | 60 | 25 | 5 | 2 | 8 | | 33 |
| Nr. 10 | 58 | 42 | | | | | 16 |
| Nr. 11 | 68 | 24 | | 5 | | 3 | 17 |

Mit der Menge an Neodym, Praseodym, Lanthan und Hafnium, welche dem Sauerstoffspeichermaterial der zweiten Schicht (2) zugegeben wird, lassen sich somit die Eigenschaften der katalytisch aktiven Schicht einstellen. Durch diese Materialien können die thermische Stabilität, die Sauerstoffspeicherkapazität und die Geschwindigkeit des Sauerstoffein- und -ausbaus beeinflusst und nach Bedarf eingestellt werden.

Die katalytisch wirksame Zusammensetzung der ersten Schicht (1) umfasst bevorzugt Palladium. Weiterhin umfasst sie ein Sauerstoffspeichermaterial, welches ein oder mehrere Metalle ausgewählt aus der Gruppe der seltenen Erdmetalle aufweist. Bevorzugt handelt es sich bei dem Sauerstoffspeichermaterial um ein Cer-Zirkonium-Oxid (CeₓZr_{y}O_{z}). Dieses umfasst bevorzugt 50 Gew.-% bis 80 Gew.-% CeO₂ und 10 Gew.-% bis 40 Gew.-% ZrO₂, insbesondere bevorzugt 60 Gew.-% CeO₂ und 30 Gew.-% ZrO₂ bezogen auf eine Gesamtzusammensetzung von 100 Gew.-% der ersten Schicht (1).

Die Zugabe von ZrO₂ zu CeO₂ führt auch hier zu einer verbesserten thermischen Stabilität und somit zu einer höheren Aktivität und längeren Lebensdauer des Mehrschichtkatalysators (4), wie hinsichtlich des Sauerstoffspeichermaterials der zweiten Schicht (2) erläutert.

Bevorzugt umfasst die katalytisch wirksame Zusammensetzung der ersten Schicht (1) das Sauerstoffspeichermaterial in einem Anteil von 40 Gew.-% bis 90 Gew.-%, besonders bevorzugt in einem Anteil von 70 Gew.-% bezogen auf eine Gesamtzusammensetzung von 100 Gew.-% der ersten Schicht (1). Der Anteil von Palladium in dieser Schicht liegt bevorzugt im Bereich von 0,5 Gew.-% bis 5 Gew.-%.

Die Beladung der ersten (1) und/oder der zweiten Schicht (2) mit der jeweiligen katalytisch wirksamen Zusammensetzung liegt bevorzugt im Bereich von 40 g/L bis 150 g/L, bevorzugt 75 g/L. Die Beladung gibt die Menge der aufgetragenen katalytisch aktiven Zusammensetzung bezogen auf das Leervolumen des Katalysators an.

Bevorzugt umfasst die Zusammensetzung der ersten Schicht (1) ein Sauerstoffspeichermaterial und die Zusammensetzung der zweiten Schicht (2) ein Sauerstoffspeichermaterial, wobei das Sauerstoffspeichermaterial der Zusammensetzung der ersten Schicht (1) von dem Sauerstoffspeichermaterial der Zusammensetzung der zweiten Schicht (2) verschieden ist. Dabei können die Zusammensetzung der ersten Schicht (1) und/oder die Zusammensetzung der zweiten Schicht (2) weiterhin γ-Al₂O₃, welches vorzugsweise mit Lanthanoxid dotiert ist, aufweisen.

Weist die Zusammensetzung der ersten Schicht (1) γ-Al₂O₃ auf, so beträgt der Anteil von γ-Al₂O₃ bevorzugt 10 Gew.-% bis 60 Gew.-%, besonders bevorzugt 30 Gew.-% bezogen auf 100 Gew.-% Gesamtzusammensetzung der ersten Schicht (1). Weist die Zusammensetzung der zweiten Schicht (2) γ-Al₂O₃ auf, so beträgt der Anteil von γ-Al₂O₃ bevorzugt 10 Gew.-% bis 30 Gew.-%, besonders bevorzugt 10 Gew.-% bezogen 100 Gew.-% Gesamtzusammensetzung der zweiten Schicht (2).

Der Anteil an γ-Al₂O₃ in der katalytisch wirksamen Schicht beeinflusst die Haftung der Zusammensetzung auf der Oberfläche des Innenseite des Trägers. Die erste Schicht (1) ist vollständig auf dem Trägermaterial des Mehrschichtkatalysators (4) aufgetragen, wohingegegen die zweite Schicht (2) teilweise auf der ersten Schicht (1) und teilweise auf dem Trägermaterial aufgetragen ist. Daher weist die Zusammensetzung der ersten Schicht (1) bevorzugt einen höheren Anteil an γ-Al₂O₃ auf als die Zusammensetzung der zweiten Schicht (2). Übersteigt der Anteil an γ-Al₂O₃ in der Zusammensetzung der zweiten Schicht (2) 30 Gew.-%, wird der NOₓ-Umsatz der Schicht schlechter. Mit steigendem Anteil an Sauerstoffspeichermaterial an der zweiten Schicht, verbessert sich somit der NOₓ-Umsatz des Mehrschichtkatalysators (4). Halbiert man in einem Katalysator die Menge an eingesetztem Sauerstoffspeichermaterial und ersetzt diese durch γ-Al₂O₃, so steigt die NOₓ-Emission um etwa 25 bis 30 % an. Verwendet man Sauerstoffspeichermaterialien mit γ-Al₂O₃-Anteilen von 30 Gew.-% oder weniger, werden Stickoxide (NOx) in einer Menge von etwa 0,0099 g/km (Gramm NO_{X} pro Kilometer Fahrtstrecke) ausgestoßen. Halbiert man nun die Menge an Sauerstoffspeichermaterialien, so erhöht sich der Wert auf 0,125 g/km.

Vorzugsweise handelt es sich bei dem γ-Al₂O₃ um mit Lanthanoxid La₂O₃ dotiertes Aluminiumoxid. Der Gehalt von La₂O₃ bezogen auf die Menge an Al₂O₃ liegt bevorzugt im Bereich von 2 Gew.-% bis 4 Gew.-%, besonders bevorzugt bei 3 Gew.-%. Bei dem γ-Al₂O₃ ist eine große BET-Oberfläche bevorzugt. Die BET-Oberfläche von γ-Al₂O₃ liegt üblicherweise bei etwa 200 m²/g. Bei hohen Temperaturen, wie sie beispielsweise beim Sintern bei der Herstellung eines Katalysators oder auch im Betrieb auftreten, sinkt dieser Wert auf etwa 40 bis 50 m²/g. Durch die Dotierung mit Lanthanoxid wird eine höhere thermische Stabilität von γ-Al₂O₃ erreicht. Die BET-Oberfläche von dotiertem γ-Al₂O₃ liegt auch nach thermischer Behandlung noch in einem Bereich von über 70 m²/g, besonders bevorzugt bei 90 m²/g.

Bevorzugt umfasst ein Mehrschichtkatalysator somit wenigstens eine erste katalytisch wirksame Zusammensetzung in einer ersten Schicht (1), welche ein Sauerstoffspeichermaterial, mit La₂O₃ dotiertes γ-Al₂O₃ und Palladium umfasst, und eine zweite katalytisch wirksame Zusammensetzung in einer zweiten Schicht (2), welche ein Sauerstoffspeichermaterial, mit La₂O₃ dotiertes γ-Al₂O₃ und Platin und/oder Rhodium umfasst, auf. Besonders bevorzugt bestehen die Schichten aus den jeweiligen Zusammensetzungen und besonders bevorzugt bestehen die Zusammensetzungen aus den genannten Komponenten.

Aus dem Stand der Technik ist bekannt, dass Rhodium, welches sich auf γ-Al₂O₃ befindet, für die eigentliche Katalyse-Reaktion nicht oder nur eingeschränkt zur Verfügung steht. Daher befinden sich bevorzugt Platin und/oder Rhodium in der Zusammensetzung der zweiten Schicht (2) zumindest fast ausschließlich auf dem Sauerstoffspeichermaterial. "Fast ausschließlich" bedeutet, dass das oder die Edelmetalle zu wenigstens 90%, bevorzugt zu wenigstens 95%, insbesondere zu wenigstens 98%, speziell zu 99% auf dem Sauerstoffspeichermaterial aufgebracht ist.

Überraschenderweise hat sich nun gezeigt, dass eine Balance zwischen geringer Light-Off-Temperatur und gleichzeitig großem Lambdafenster erreicht werden kann, wenn das Palladium in der Zusammensetzung der ersten Schicht (1) sich nicht fast ausschließlich auf dem Sauerstoffspeichermaterial befindet. In einer bevorzugten Ausführungsform befindet sich ein Anteil von 30 Gew.-% bis 40 Gew.-%, insbesondere 30 Gew.-% des Palladiums auf dem γ-Al₂O₃, während sich 60 Gew.-% bis 70 Gew.-%, insbesondere 70 Gew.-% des Palladiums auf dem Sauerstoffspeichermaterial befinden. Ist das Palladium in der Zusammensetzung der ersten Schicht (1) fast ausschließlich auf dem Sauerstoffspeichermaterial aufgetragen, so wirkt sich dies nachteilig auf das Light-Off-Verhalten des Mehrschichtkatalysators (4) aus.

Bevorzugt ist die erste Schicht (1) im Wesentlichen frei von Platin und/oder Rhodium. Vorzugsweise ist die zweite Schicht (2) im Wesentlichen frei von Palladium. Im "Wesentlichen frei" im Sinne der vorliegenden Anmeldung bedeutet, dass das Gewichtsverhältnis von Palladium in der zweiten Schicht (2) zu Palladium in der ersten Schicht (1) bevorzugt kleiner als 1:10, vorzugsweise kleiner 1:50, insbesondere kleiner 1:100 oder kleiner 1:500, speziell 0, und dass das Gewichtsverhältnis von Platin und/oder Rhodium in der ersten Schicht (1) zu Platin und/oder Rhodium in der zweiten Schicht (2) bevorzugt kleiner als 1:10, vorzugsweise kleiner 1:50, insbesondere kleiner 1:100 oder kleiner 1:500, speziell 0 ist.

Der Mehrschichtkatalysator (4) umfasst eine Trägerstruktur (3), die Kanäle zur Durchführung von Gasen aufweist. Auf zumindest einem Teil der Kanäle wird auf die Innenseite eine katalytisch wirksame Zusammensetzung aufgebracht. Dabei kann die Trägerstruktur (3) ein keramisches oder ein metallisches Material umfassen. Bevorzugt umfasst sie ein metallisches Material, insbesondere eine metallische Folie, die Eisen, Chrom und Aluminium umfasst.

Die metallische Folie umfasst bevorzugt einen Anteil von 4 Gew.-% bis 6 Gew.-% Aluminium und einen Anteil von 15 Gew.-% bis 20 Gew.-% Chrom. Liegt der Anteil an Aluminium über 6 Gew.-%, ist die Folie nicht flexibel genug, um in die gewünschte Form der Trägerstruktur gebracht zu werden. Liegt der Anteil an Aluminium bei unter 4% haftet die katalytisch wirksame Schicht nicht darauf. Dabei hat sich gezeigt, dass eine homogene Verteilung des Aluminiums in der Folie wichtig ist. Durch den Einfluss von Wärme und Sauerstoff bildet sich Aluminiumoxid, welches an die Oberfläche der Metallfolie wandert. Ist die Konzentration an Aluminiumoxid an der Oberfläche sehr hoch, bildet sich eine raue Oberflächenstruktur aus. Dies geschieht bei Folien mit einem Anteil an Aluminium von über 6 Gew.-% und kann beispielsweise im Rasterelektronenmikroskop verfolgt werden. Auf einer solch rauen Oberfläche haftet die katalytisch wirksame Schicht nicht oder nur schlecht. Die Wirksamkeit des Katalysators ist so nicht sicher gestellt.

Entsprechend raue Oberflächen können sich aber auch lokal ausbilden. Ist das Aluminium in der metallischen Folie nicht homogen verteilt, bilden sich an den Stellen, an denen die Konzentration an Aluminium lokal 6% übersteigt, raue Oberflächenbereiche aus, an denen die katalytisch wirksame Schicht ebenfalls nicht haften kann.

Die Dicke einer solchen metallischen Folie liegt bevorzugt im Bereich von 30 µm bis 200 µm, bevorzugt beträgt die Dicke 100 µm. Ist die Folie dünner als 30 µm, so weist sie keine ausreichende thermische und mechanische Stabilität auf. Liegt die Dicke der Folie bei über 200 µm, so ist diese zu starr, um in die gewünschte Form gebracht zu werden. Zudem steigt das Gewicht des Katalysators an.

Wenigstens ein Teil der Kanäle der Trägerstruktur (3) weisen die wenigstens teilweise auf der Innenseite aufgebrachte erste katalytisch wirksame Schicht (1) und wenigstens teilweise die erste Schicht (1) bedeckende zweite katalytisch wirksame Schicht (2) auf. Dabei kann die zweite Schicht (2) die Oberfläche der ersten Schicht (1) zu wenigstens 50%, vorzugsweise zu wenigstens 60%, weiter bevorzugt zu wenigstens 75%, insbesondere zu wenigstens 85%, speziell zu wenigstens 90% oder zu wenigstens 95% bedecken.

Bevorzugt bedeckt die zweite Schicht (2) die Oberfläche der ersten Schicht (1) nicht vollständig. Vorzugsweise bedeckt die zweite Schicht (2) die Oberfläche der ersten Schicht (1) in einem Bereich von 60% bis 95%, bevorzugt von 70% bis 90%, insbesondere von 72% bis 88%. Dabei hat sich gezeigt, dass ein Verhältnis der Länge der ersten Schicht (1) entlang der Strömungsrichtung zur Länge der zweiten Schicht (2) entlang der Strömungsrichtung in einem Bereich 1:2 bis 2:1, vorzugsweise von 1:1,5 bis 1,5:1, insbesondere von 1:1,2 bis 1,2:1 besonders bevorzugt ist.

Bedeckt die zweite Schicht (2) die Oberfläche der ersten Schicht (1) vollständig, so ist die Umsatzrate des Katalysators geringer. Ebenso zeigt sich ein negativer Effekt, wenn die erste Schicht (1) in Strömungsrichtung nach der zweiten Schicht (2) angeordnet ist, es also keine Überlappung der beiden Schichten gibt. Bei einer solchen Zonenbeschichtung, bei der kaum oder keine Überlappung der beiden Schichten auftritt, ist die CO-Emission deutlich höher, als bei einer Lagenbeschichtung, in der erste Schicht (1) und zweite Schicht (2) überlappen. Der Umsatz des aus dem Verbrennungsmotor strömenden Abgases wird also schlechter, wie aus der nachfolgenden Tabelle 7 ersichtlich. Angegeben sind die Emissionswerte, also die Menge an CO und NOₓ, die nach dem Durchgang durch den Katalysator nach dem offiziellen Messzyklus gemessen werden. Eine Verschlechterung der Emissionen insgesamt ergibt sich sowohl bei einer Zonenbeschichtung als auch bei einer Lagenbeschichtung, wenn die Schichten gealtert, also einer Temperaturbehandlung ausgesetzt werden. Jedoch auch nach der Alterung werden die Emissionsgrenzwerte von 2,0 g/km für CO und 0,150 g/km für NOₓ eingehalten.

**Tabelle 7:**

| **Art der Beschichtung** | **CO [g/km]** | **NOₓ [g/km]** |
|---|---|---|
| Zonenbeschichtung | 0,507 | 0,094 |
| Lagenbeschichtung | 0,368 | 0,107 |
| | | |
| Zonenbeschichtung, gealtert | 0,912 | 0,127 |
| Lagenbeschichtung, gealtert | 0,625 | 0,127 |

Der Mehrschichtkatalysator (4) kann neben der ersten Schicht (1) und der zweiten Schicht (2) weitere katalytisch aktive Schichten, welche erfindungsgemäß hergestellte Zusammensetzungen enthalten, umfassen. Bevorzugt weist er zwei katalytisch wirksame Schichten auf.

In einer bevorzugten Ausführungsform sind die erste Schicht (1) und die zweite Schicht (2) derart angeordnet, dass im Betrieb das Abgas zuerst mit der zweiten Schicht (2) in Kontakt tritt. Diese Ausführungsform ist in Fig. 4 dargestellt. Strömt das Abgas aus dem Verbrennungsmotor in den Katalysator, so trifft es in dieser Ausführungsform zunächst auf die zweite Schicht (2). An dieser können Stickoxide reduziert werden, indem Sauerstoff aus dem Reaktionsgleichgewicht entfernt wird. Diese Reaktion muss ausreichend schnell erfolgen, um einen hohen Umsatz zu erreichen, was durch Platin und/oder Rhodium in der zweiten Schicht (2) ermöglicht wird. Anschließend strömt das Abgas die erste Schicht (1) an, welche Palladium umfasst. Palladium in der ersten Schicht (1) sorgt für einen langsameren Ein- und Ausbau von Sauerstoff im Sauerstoffspeichermaterial gegenüber der zweiten Schicht (2). Durch das Palladium wird jedoch die Sauerstoffspeicherkapazität des Sauerstoffspeichers der ersten Schicht (1) erhöht. Im Sauerstoffspeicher der zweiten Schicht (2) eingelagerter Sauerstoff kann daher an den Sauerstoffspeicher der ersten Schicht (1) abgegeben werde. Eine Sättigung des Sauerstoffspeichers der zweiten Schicht (2), welche zu einer Verschlechterung der Reduktion der Stickoxide führen würde, wird somit vermieden.

Durch die Verwendung von Platin und/oder Rhodium in der zweiten Schicht (2) und den Einsatz von Palladium in der ersten Schicht (1) weist die zweite Schicht (2) unter Einsatzbedingungen eine höhere Aktivität hinsichtlich der Stickoxidreduktion als die erste Schicht (1) auf.

Der Mehrschichtkatalysator ist vorzugsweise ein 3-Wege-Katalysator. Dieser ist besonders bevorzugt für die Abgasnachbehandlung von 4-Takt-Benzinmotoren, insbesondere für die Abgasnachbehandlung von Motorrädern mit 4-Takt-Benzinmotoren mit einem Hubraum bis zu 2000 cm³. Bei diesen tritt im Betrieb eine große Lambdaschwankung in einem Bereich von 0,7 bis 1,3, insbesondere von 0,8 bis 1,2 auf. Der Mehrschichtkatalysator (4) kann auch bei diesen Lambdaschwankungen die Abgase fast vollständig umsetzen.

Ein Mehrschichtkatalysator (4) kann beispielsweise in Kleinmotoren, in Motorrädern, der Automobilindustrie, in Nutzfahrzeugen, für Industrie- und Spezialanwendungen und bei Marineapplikationen verwendet werden.

Ein Herstellungsverfahren umfasst für den beschriebenen Mehrschichtkatalysator (4) die folgenden Schritte:
a. Bereitstellen einer Trägerstruktur,
b. Bereitstellen einer ersten nach dem erfindungsgemäßen Verfahren hergestellten katalytisch wirksamen Zusammensetzung,
c. Beschichten der Trägerstruktur mit der ersten katalytisch aktiven Zusammensetzung zur Herstellung einer ersten Schicht (1),
d. Bereitstellen einer zweiten nach dem erfindungsgemäßen Verfahren hergestellten katalytisch wirksamen Zusammensetzung,
e. Beschichten der Trägerstruktur mit der zweiten katalytisch aktiven Zusammensetzung zur Herstellung einer zweiten Schicht (2),
wobei die Beschichtung derart erfolgt, dass die erste und die zweite Zusammensetzung so aufgebracht werden, dass die erste Schicht (1) wenigstens teilweise von der zweiten Schicht (2) bedeckt wird.

Bevorzugt sind die erste Schicht (1) und die zweite Schicht (2) derart angeordnet, dass in Betrieb das Abgas zuerst mit der zweiten Schicht (2) in Kontakt tritt.

Nach dem Beschichten mit der ersten katalytisch wirksamen Zusammensetzung und vor dem Beschichten mit der zweiten katalytisch wirksamen Zusammensetzung kann die Trägerstruktur zusammen mit der ersten Zusammensetzung getempert werden. Bevorzugt erfolgt dies bei einer Temperatur von 500 °C bis 900°C, bevorzugt von 650 bis 850°C, am meisten bevorzugt bei 750°C. Es ist jedoch auch möglich, die erste Schicht zunächst bei einer ersten Temperatur T₁ im Bereich von 400 °C bis 700 °C und anschließend bei einer Temperatur T₂ im Bereich von 700 °C bis 1200 °C zu tempern. Auch nach dem Beschichten mit der zweiten katalytisch wirksamen Zusammensetzung wird die Trägerstruktur bevorzugt bei einer Temperatur von 400 °C oder mehr, insbesondere in einem Bereich von 400 °C bis 700 °C getempert. Vor dem jeweiligen Tempern kann die aufgebrachte Zusammensetzung noch getrocknet werden. Die Trocknung kann bei Temperaturen im Bereich von 90 °C bis 150 °C, bevorzugt bei 110 °C erfolgen.

Beschichtung im Sinne der vorliegenden Anmeldung umfasst alle möglichen aus dem Stand der Technik bekannten Beschichtungsarten, wie beispielsweise Einspritzen, Sprühen oder Eintauchen.

### Ausführungsbeispiele:

### 1. Herstellung einer katalytisch aktiven Zusammensetzung

Zur Herstellung einer Zusammensetzung wurden zunächst 140g des oxidischen Trägermaterials Nr. 5 in 300ml vollentsalztem Wasser bei Raumtemperatur gerührt.

Eine wässrige Palladiumnitrat-Lösung wurde mit vollentsalztem Wasser verdünnt, so dass die Konzentration an Edelmetall in der Lösung 0,002 Gew.-% betrug. Unter Rühren wurde diese Edelmetallsalzlösung zu dem oxidischen Trägermaterial zugetropft. Dabei wurde der pH-Wert in einem Bereich von 4 bis 5 gehalten. Der pH-Wert wurde mit Ammoniak eingestellt.

Anschließend wurden 60g des oxidischen Trägermaterials Nr. 2. zugegeben und die erhaltene Dispersion erneut gerührt. Die erhaltene Dispersion wurde filtriert.
Die Zusammensetzung entspricht Zusammensetzung 2 aus Tabelle 1.

Zusammensetzung 1 aus Tabelle 1 wurde entsprechend hergestellt, nur dass hier die Konzentration an Pd in der Edelmetallsalzlösung 7 Gew.-% betrug.

Die Herstellung der Zusammensetzung 4 erfolgte gemäß der Herstellung für Zusammensetzung 1, wobei die oxidischen Trägermaterialien, wie sie in Tabelle 1 angegeben sind, eingesetzt wurden.

### 2. Herstellung einer katalytisch aktiven Zusammensetzung

Zur Herstellung der Zusammensetzung 3 wurde eine Zusammensetzung analog dem zur Zusammensetzung 2 beschriebenen Verfahren hergestellt. Die Wahl der oxidischen Trägermaterialien erfolgte gemäß Tabelle 1.

Der pH-Wert der Lösung wurde statt mit Ammoniak mit einer Natriumcarbonat-Lösung (12,9 g Natriumcarbonat in 100ml Wasser) eingestellt. Der pH-Wert lag im Bereich von 7,5 bis 8.

Nach Zugabe des zweiten oxidischen Trägers wurde die Mischung gerührt und anschließend filtriert.

## Patentansprüche

1. Verfahren zur Herstellung einer katalytisch wirksamen Zusammensetzung für Katalysatoren umfassend die folgenden Schritte:
a) Bereitstellen eines ersten oxidischen Trägermaterials,
b) Bereitstellen von einem oder mehreren Edelmetallsalzen in Form einer Edelmetallsalzlösung, wobei die Konzentration an Edelmetall in der Lösung 0,01 Gew.-% oder weniger, bezogen auf 100 Gew.-% der Gesamtlösung, beträgt,
c) Herstellung einer Suspension bei der das erste oxidische Trägermaterial aus Schritt a) mit der Edelmetallsalzlösung aus Schritt b) in Kontakt gebracht wird und
d) Einbringen eines zweiten oxidischen Trägermaterials in die in Schritt c) erhaltene Suspension,
wobei das erste oxidische Trägermaterial Cer-Zirkonium-Oxid ist, und wobei das Edelmetall/die Edelmetalle ausgewählt ist/sind aus der Gruppe der Platingruppenmetalle, insbesondere aus der Gruppe, die aus Platin, Palladium und Rhodium besteht.

2. Verfahren nach Anspruch 1, **dadurch gekennzeichnet, dass** das erste und das zweite oxidische Trägermaterial gleich sind.

3. Verfahren nach Anspruch 1, **dadurch gekennzeichnet, dass** das erste und das zweite oxidische Trägermaterial verschieden sind.

4. Verfahren nach Anspruch 1 oder 3, **dadurch gekennzeichnet, dass** das zweite oxidische Trägermaterial ausgewählt ist aus der Gruppe, die aus Aluminiumoxid, Bariumoxid, Zinnoxid und Titanoxid besteht.

5. Verfahren nach einem oder mehreren der Ansprüche 1 bis 4, **dadurch gekennzeichnet, dass** die Gesamtmenge des Edelmetalls im Bereich von 0,01 bis 10 Gew.-%, bevorzugt 0,1 bis 5 Gew.-% besonders bevorzugt 0,2 bis 2 Gew.-% beträgt, bezogen auf das Gesamtgewicht von 100 Gew.-% aus erstem oxidischen Trägermaterial und Edelmetall.

6. Verfahren nach einem oder mehreren der Ansprüche 1 bis 5, **dadurch gekennzeichnet, dass** das Edelmetallsalz/die Edelmetallsalze in Form seines/ihrer Nitratsalze(s) bereitgestellt wird.

7. Verfahren nach einem oder mehreren der Ansprüche 1 bis 6, **dadurch gekennzeichnet, dass** der pH-Wert der in Schritt c) hergestellten Suspension in einen Bereich von 4 bis 10 eingestellt wird.

8. Verfahren nach Anspruch 7, **dadurch gekennzeichnet, dass** der pH-Wert in einen Bereich von 4 bis 7, insbesondere in einen Bereich von 4,5 bis 6,5 oder in einen Bereich von 7,5 bis 10, insbesondere in einen Bereich von 7,5 bis 8,5 eingestellt wird.

9. Verfahren nach einem oder mehreren der Ansprüche 1 bis 8, **dadurch gekennzeichnet, dass** der pH-Wert der Suspension mit Ammoniak und/oder einer wässrigen Natriumcarbonatlösung eingestellt wird.

10. Verfahren nach Anspruch 9, **dadurch gekennzeichnet, dass** der pH-Wert mit einer wässrigen Natriumcarbonatlösung eingestellt wird.

11. Verfahren nach einem oder mehreren der Ansprüche 1 bis 10, **dadurch gekennzeichnet, dass** die Schritte a) bis d) bei einer Temperatur im Bereich von 10 °C bis 90 °C, vorzugsweise im Bereich von 15 °C bis 50 °C, insbesondere bevorzugt im Bereich von 20 °C bis 40 °C durchgeführt werden.

12. Verfahren nach einem oder mehreren der Ansprüche 1 bis 11, **dadurch gekennzeichnet, dass** die in Schritt d) erhaltene Suspension filtriert wird.

## Claims

1. Method for the production of a catalytically active composition for catalysts comprising the following steps of:
a) Providing a first oxidic carrier material;
b) providing one or more precious metals in the form of a precious metal salt solution, whereby the concentration of precious metal in the solution is 0.01% by weight or less, relative to the total solution being 100% by weight;
c) production of a suspension, in which the first oxidic carrier material from step a) is contacted to the precious metal salt solution from step b); and
d) introducing a second oxidic carrier material into the suspension obtained in step c),
whereby the first oxidic carrier material is cerium-zirconium oxide, and
whereby the precious metal/the precious metals is/are selected from the group of the platinum group metals, in particular from the group consisting of platinum, palladium, and rhodium.

2. Method according to claim 1, **characterised in that** the first and the second oxidic carrier materials are identical.

3. Method according to claim 1, **characterised in that** the first and the second oxidic carrier material are different from each other.

4. Method according to claim 1 or 3, **characterised in that** the second oxidic carrier material is selected from the group consisting of aluminium oxide, barium oxide, tin oxide, and titanium oxide.

5. Method according to any one or more of the claims 1 to 4, **characterised in that** the total amount of the precious metal is in the range of 0.01 to 10% by weight, preferably 0.1 to 5% by weight, particularly preferably 0.2 to 2% by weight, relative to the total weight of first oxidic carrier material and precious metal being 100% by weight.

6. Method according to any one or more of the claims 1 to 5, **characterised in that** the precious metal salt/the precious metal salts is/are provided in the form of its/their nitrate salt(s).

7. Method according to any one or more of the claims 1 to 6, **characterised in that** the pH value of the suspension produced in step c) is adjusted to be in a range from 4 to 10.

8. Method according to claim 7, **characterised in that** the pH is adjusted to be in a range from 4 to 7, in particular in a range from 4.5 to 6.5, or in a range from 7.5 to 10, in particular in a range from 7.5 to 8.5.

9. Method according to any one or more of the claims 1 to 8, **characterised in that** the pH value of the suspension is adjusted with ammonia and/or an aqueous sodium carbonate solution.

10. Method according to claim 9, **characterised in that** the pH value is adjusted with an aqueous sodium carbonate solution.

11. Method according to any one or more of the claims 1 to 10, **characterised in that** steps a) to d) are carried out at a temperature in the range of 10°C to 90°C, preferably in the range of 15°C to 50°C, particularly preferably in the range of 20°C to 40°C.

12. Method according to any one or more of the claims 1 to 11, **characterised in that** the suspension obtained in step d) is being filtered.

## Revendications

1. Procédé de fabrication d'une composition efficace du point de vue catalytique pour des catalyseurs comprenant les étapes suivantes :
a) mise à disposition d'un premier matériau support oxydique,
b) mise à disposition d'un ou plusieurs sels de métal noble sous forme d'une solution de sel de métal noble, dans lequel la concentration en métal noble dans la solution se monte à 0,01 % en poids ou moins, par rapport à 100 % en poids de la solution entière,
c) fabrication d'une suspension pour laquelle le premier matériau support oxydique de l'étape a) est amené en contact avec la solution de sel de métal noble de l'étape b), et
d) introduction d'un second matériau support oxydique dans la suspension obtenue à l'étape c),
dans lequel le premier matériau support oxydique est l'oxyde de cériumzirconium, et dans lequel le métal noble/les métaux nobles est/sont sélectionné(s) parmi le groupe des métaux du groupe du platine, notamment parmi le groupe qui se compose du platine, palladium et rhodium.

2. Procédé selon la revendication 1, **caractérisé en ce que** le premier et le second matériau support oxydique sont identiques.

3. Procédé selon la revendication 1, **caractérisé en ce que** le premier et le second matériau support oxydique sont différents.

4. Procédé selon la revendication 1 ou 3, **caractérisé en ce que** le second matériau support oxydique est sélectionné parmi le groupe qui se compose de l'oxyde d'aluminium, l'oxyde de baryum, l'oxyde d'étain et l'oxyde de titane.

5. Procédé selon une ou plusieurs des revendications 1 à 4, **caractérisé en ce que** la quantité totale du métal noble est dans la plage de 0,01 à 10 % en poids, de préférence 0,1 à 5 % en poids, de manière particulièrement préférée 0,2 à 2 % en poids, par rapport au poids total de 100 % en poids du premier matériau support oxydique et du métal noble.

6. Procédé selon une ou plusieurs des revendications 1 à 5, **caractérisé en ce que** le sel de métal noble/les sels de métal noble est/sont mis à disposition sous forme de son sel de nitrate/leurs sels de nitrate.

7. Procédé selon une ou plusieurs des revendications 1 à 6, **caractérisé en ce que** la valeur de pH de la suspension fabriquée à l'étape c) est réglée dans une plage de 4 à 10.

8. Procédé selon la revendication 7, **caractérisé en ce que** la valeur de pH est réglée dans une plage de 4 à 7, notamment dans une plage de 4,5 à 6,5 ou dans une plage de 7,5 à 10, notamment dans une plage de 7,5 à 8,5.

9. Procédé selon une ou plusieurs des revendications 1 à 8, **caractérisé en ce que** la valeur de pH de la suspension est réglée avec de l'ammoniac et/ou une solution de carbonate de sodium aqueuse.

10. Procédé selon la revendication 9, **caractérisé en ce que** la valeur de pH est réglée avec une solution de carbonate de sodium aqueuse.

11. Procédé selon une ou plusieurs des revendications 1 à 10, **caractérisé en ce que** les étapes a) à d) sont réalisées à une température dans la plage de 10°C à 90°C, de préférence dans la plage de 15°C à 50°C, de manière particulièrement préférée dans la plage de 20°C à 40°C.

12. Procédé selon une ou plusieurs des revendications 1 à 11, **caractérisé en ce que** la suspension obtenue à l'étape d) est filtrée.
